·Europäisches Patentamt

**European Patent Office**    (11) Publication number: **0 055 374**

Office européen des brevets    **B1**

(12)    # EUROPEAN PATENT SPECIFICATION

(45) Date of publication of patent specification: **24.08.88**    (51) Int. Cl.⁴: **G 06 F 13/12, G 06 F 13/18**

(21) Application number: **81109156.0**

(22) Date of filing: **29.10.81**

(54) Data processing apparatus including a peripheral processing complex.

(30) Priority: **29.12.80 US 220636**
**29.12.80 US 220637**
**09.03.81 US 241902**

(43) Date of publication of application:
**07.07.82 Bulletin 82/27**

(45) Publication of the grant of the patent:
**24.08.88 Bulletin 88/34**

(84) Designated Contracting States:
**DE FR GB IT**

(56) References cited:
**FR-A-2 374 796**
**GB-A-1 170 586**
**GB-A-2 011 680**

**11TH ASILOMAR CONFERENCE ON CIRCUITS,
SYSTEMS AND COMPUTERS, Pacific Grove,
7th-9th November 1977, pages 461-465, IEEE,
Long Beach, USA L.H. POLLARD:
"Multiprocessing with the TI 9900"**

(73) Proprietor: **International Business Machines
Corporation
Old Orchard Road
Armonk, N.Y. 10504 (US)**

(72) Inventor: **Norgren, Kent Steven
444 Highland Drive
Longmont Colorado 80501 (US)**
Inventor: **Vogelsberg, Robert Eric
1345A Bear Mountain Drive
Boulder Colorado 80303 (US)**
Inventor: **Bushaw, Kenneth Allen
1431 Mt. Evans Drive
Longmont Colorado 80501 (US)**
Inventor: **Woodward, Milton Holloway
5040 Ingersol Place
Boulder Colorado 80303 (US)**
Inventor: **Rackley, Darwin Preston
17755 Maplewood Drive
Boca Raton Florida 33431 (US)**

(74) Representative: **Grant, Iain Murray
IBM United Kingdom Limited Intellectual
Property Department Hursley Park
Winchester Hampshire SO21 2JN (GB)**

Courier Press, Leamington Spa, England.

EP 0 055 374 B1

**Description**

The present invention relates to data processing apparatus including a peripheral processing complex and is directed at the problem of efficiently processing large quantities of data in an approximate real time mode under the control of a central processor while maintaining the impact of such processing on the central processor as low as possible. As an example, consider a central processor supporting, inter alia, "electronic mail" that is the distribution of documents by electronic means rather than by the physical transfer of paper. Much processing is required.

A single document to be transmitted is converted to millions of data bits per page. Document distribution systems may use coded information (CI) or non-coded information (NCI) to electronically send the document image. Whether the data is CI or NCI, it must be processed before it is transmitted. Processing may include data compression to reduce transmission time and data encryption for security purposes. Processing millions of data bits with a central processor to achieve these functions is wasteful and time-consuming.

Known techniques for improving data processing efficiency include time-sharing access by peripheral devices to a central processing unit (CPU) and time-sharing programs in a CPU. One example of such a system is taught in U.S. patent 3,029,414 issued to H. W. Shrimpf on April 10, 1962. However, this system still processes all the data at the CPU and through the main memory. Therefore it does not lend itself to fast processing of large quantities of raw data from peripheral devices.

Another data processing technique is to time-share access to peripheral devices with two processing units. An example of this system is taught in U.S. Patent 3,560,937 issued to R. P. Fischer on February 2, 1971. The Fischer system could be adapted to handle vast quantities of peripheral data faster than the Shrimpf system simply because it can use two processors to attack the problem. However, all the data is still flowing through a single main memory and the processors at any one instant can only perform two functions since there are only two processors.

A technique for simplifying the access to peripheral devices is shown in U.S. Patent 4,067,059 issued to N. Derchak on January 3, 1978.

In this patent the addressing of multiple peripheral devices is controlled by a "Shared Direct Memory Access" device. This does allow fast flexible simpler access to the peripheral devices, but all the processing is still performed by one CPU working with the memory. Accordingly, this system cannot handle vast quantities of peripheral data any more efficiently than the Schrimpf system.

In the field of facsimile apparatus (NCI system), stored program control processors have been used to control a facsimile terminal as shown in R. E. Wernikoff et al U.S. patent 3,751,582. However, the control processing and the data processing both take place in the processor. Therefore, the system cannot rapidly process vast quantities of video data without using an expensive and very powerful data processor.

The present invention seeks to overcome the above problems and it is to be noted that it is closely related to co-pending European Application 81108988.7 (EP-A- 0.055 369) claiming the same priority date and claiming the use of a supervisory mode and an automatic mode of operation in a modular document distribution terminal. The present invention is directed to the detailed handling of shared storage in such or a similar context and provides data processing apparatus comprising a central processor with its own storage and coupled to a peripheral processing complex which complex includes plural autonomous peripheral processors of limited function, shared storage to which the autonomous peripheral processors are coupled by data communication paths and a control processor which has no data communication path to the shared storage but which incorporates a set of memory address registers for the peripheral processors, memory address increment logic and 'end-of-block' detection means the central processor being connected to the peripheral processors and to the control processor by control paths so as to be able to initialise the peripheral processors, including establishing their respective current associations with the memory address registers, the memory address registers, to point to an initial respective area of shared storage and the current mode of operation of the combination of the memory address increment logic and 'end-of-block' detection means to automatically advance the address contents of a memory address register on each usage, up to the limit defined therefor, by its currently associated processor, thereby to process different blocks of data in parallel by different peripheral processors, as determined by the central processor but without imposing a running overhead thereon.

Such an arrangement appears deceptively simple once enunciated in such terms. What is provided, however, is the key to a peripheral processing structure which is a pipeline processor of variable configuration and operation requiring only periodic attention from the central processor though operating wholly within the control of the central processor. It is possible to arrange for the central processor to time share the shared storage with the peripheral complex as a whole and, for specific peripheral processors which do not return data to the shared storage, to transmit data to them over the control paths.

The invention will now be described by way of example, with reference to the accompanying drawings, in which:

Figure 1 shows the document distribution system embodying the present invention;

Figure 2 shows the adapters used in Figure 1;

Figures 3A and 3B show the timing of signals used in the system;

Figure 4 shows the portion of the peripheral processing controller containing the MAR's;

Figure 5 shows the command decoder in the peripheral processing controller which decodes commands from the supervisory CPU;

Figure 6 shows the priority circuits in the peripheral processing controller which respond to requests from the peripheral devices and generate grants of access to the peripheral processing memory;

Figure 7 shows the end-of-block detection apparatus in the peripheral processing controller;

Figure 8 shows the I/O adapter 12 of Figure 1;

Figure 9 shows a command or address decoder used in the I/O adapter of Figure 8;

Figure 10 shows the logic states of the data transfer control logic 152 in the I/O adapter of Figure 8;

Figure 11 shows an alternative embodiment of the invention;

Figure 12 shows the adapters used in Figure 11;

Figure 13 shows the peripheral processing controller used in Figure 11;

Figure 14 shows the MAR's and MAR controls 274 used in Figure 13;

Figure 15 shows the end-of-block detection apparatus used in MAR controls 274 of Figure 13;

Figure 16 shows the increment logic 286 and master register 288 used in Figure 14;

Figures 17A and 17B are example maps of memory space use as controlled by the peripheral processing controller; and

Figure 18 shows a usage counter that generates the FOURTH access signal used in Figure 16.

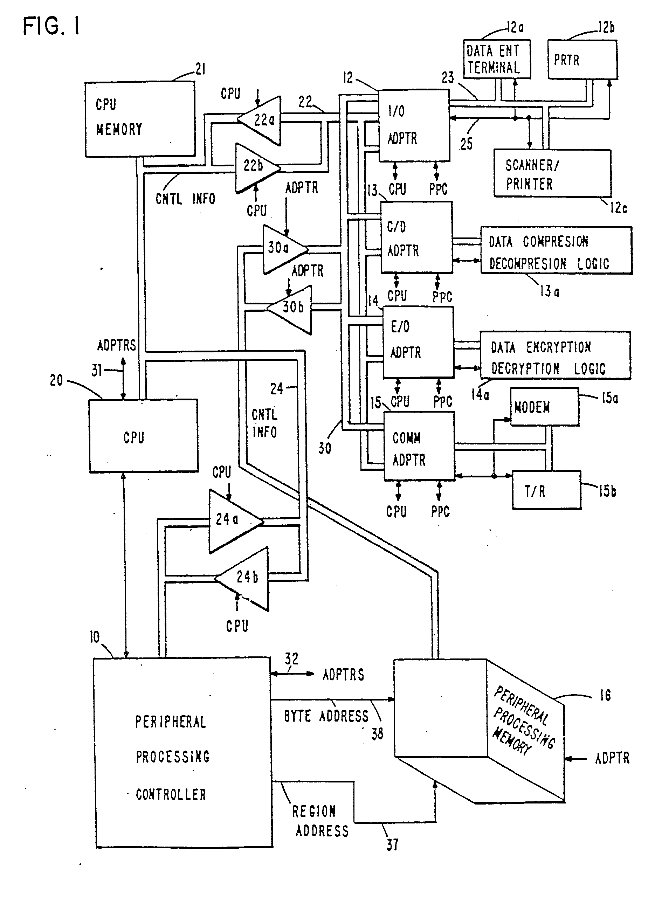

In Figure 1, controller 10 and peripheral adapters 12, 13, 14, and 15 are initialized by Central Processing Unit (CPU) 20.

Thereafter, adapters 12-15 with their peripheral devices (indicated by the same reference numeral with letter suffixes) operate simultaneously to process data directly with the peripheral processing memory 16. Controller 10 contains a plurality of memory address registers (MAR's), end-of-block logic and priority logic for controlling shared use of peripheral memory 16 by devices 12a-c, 13a, 14a, 15a-b.

CPU 20 with its memory 21 supervises the operation of the system. It does not directly process the data in the peripheral system. The CPU sends and receives control information to and from the peripheral adapters over bidirectional bus 22 using drivers 22a and 22b to steer the information flow. Similarly, CPU 20 sends and receives control information to and from peripheral processing controller 10 over bidirectional bus 24 using drivers 24a and 24b to steer the information flow. The control information includes address data, status information, commands, control bits, mode information, etc; it does not include data processed by the peripheral devices 12a-c, 13a, 14a and 15a-b.

In FIGURE 1 the buses 22, 24 and 30 represent information channels which are address controlled. The single lines represent hardwired control or address lines and may represent more than one such line. For example, CPU 20 can send control information to controller 10 or adapters 12-15 over buses 22 and 24 by addressing the information to registers in the controller or the adapters. The single line from the controller 10 labelled to adapters represent multiple signal lines such as request, grant and end-of-block. Similarly address lines 37 and 38 are multiple address lines.

In operation, CPU 20 responds to interrupts from the peripheral devices Using control bus 24 and signal lines 31, CPU 20 sets up MAR's in controller 10 with start addresses for a peripheral data processing job. Based on the job to be performed, each device uses a preassigned MAR or is assigned a MAR by CPU 20 over control bus 22. Then CPU 20 releases the peripheral adapters and their peripheral devices to perform their assigned peripheral jobs.

When each peripheral device is ready to process data it requests controller 10 over signal lines 32 to grant it access to peripheral memory 16. Controller 10 grants it access based on predetermined priority logic in the controller. The grant commands are passed back to the peripheral adapters over signal lines 32. If a peripheral device is granted access, it sends a MAR select and enable signal over lines 32 to activate its assigned MAR in controller 10. Also, it sends a Read/Write command to drivers 30a and 30b and to peripheral processing memory 16 to steer the data flow over data bus 30 from or to memory 16. The peripheral device having access then reads or writes data in peripheral memory 16 over data bus 30.

The peripheral device is assigned a MAR by having its MAR Enable and Select register 40A (inside the device) initialized by CPU 20 through command register 43.

The MAR Enable and MAR Select signals specify the MAR assigned to the peripheral adapter. The assigned MAR contains the address of the data in peripheral memory 16 that is to be processed by the peripheral device. The address consists of two portions, a region address and a byte address. The region address is passed by region address lines 37 to PPM 16. The byte address is passed by lines 38 and identifies the specific storage location within a region of memory that contains the byte of data to be accessed by the peripheral device.

Each peripheral device processes the data in memory at the address provided by its assigned MAR. Each time device 12a-c, 13a, 14a, 15a or 15b accesses the memory, the address in its MAR is incremented by one so that the device may work its way through a block of data stored in peripheral processing memory 16. After each access, the requesting device with the highest priority is granted the next access by the controller. A peripheral device will keep requesting access to PPM 16 until it gets enough data to process. Thus, the peripheral devices are processing data simultaneously within themselves and are time-sharing access to PPM 16. The addressing of a block of data in memory 16 is monitored by end-of-block logic in controller 10 so that it knows when a peripheral device has finished processing its assigned data block. The end-of-block conditions are loaded into the controller 10 over the control bus 24 by CPU 20 when the periheral device job is initialized. The conditions may be the size of the block or the number of accesses by a given peripheral device. When controller 10 detects the end-of-block, it notifies the peripheral adapter with an EOB command. The peripheral device in turn sends an INTERRUPT to CPU 20. This tells the CPU that the peripheral device has completed its assigned job.

Alternatively, if initialized to do so, the peripheral device may simply proceed to another job.

The shared peripheral-processing system shown in FIGURE 1 is a document distribution system. Input/Output adapter 12 connects a data entry module 12a, a printer module 12b or a scanner/printer module 12c to the the system. Bus 23 carries the video data and control commands. Signal lines 25 carry the hardwired control signals between the modules and the I/0 adapter. Each of the modules would preferably contain a microprocessor to supervise the print, scan or data entry function. Data entry refers to such functions as card reading, tape reading, optical character reading or keyboard data entry.

The C/D adapter 13 connects data compression or decompression logic 13a to the system. Similarly, E/D adapter 14 connects data encryption or decryption logic 14a to the facsimile system. The compression or encryption functions may be accomplished with any number of algorithms using hardwired logic or microprocessors.

The communication adapter 15 connects the system to one of several communication links. The communication links are represented by modem 15a and transmitter/receiver 15b. Typically the modem will be used to communicate over telephone lines while the transceiver might be used in a satellite communication network.

When initializing this shared peripheral-processing system, CPU 20 can configure the facsimile system to perform multiple peripheral jobs. For example, the system can be initialized in one configuration as a scanner, data compressor, data encryptor, and data transmitter. Then facsimile scan data will be processed through peripheral memory 16 in pipeline fashion. In another configuration the system can be initialized as a receiver, data decompressor and printer. In this configuration facsimile print data is processed through peripheral memory 16 in pipeline fashion.

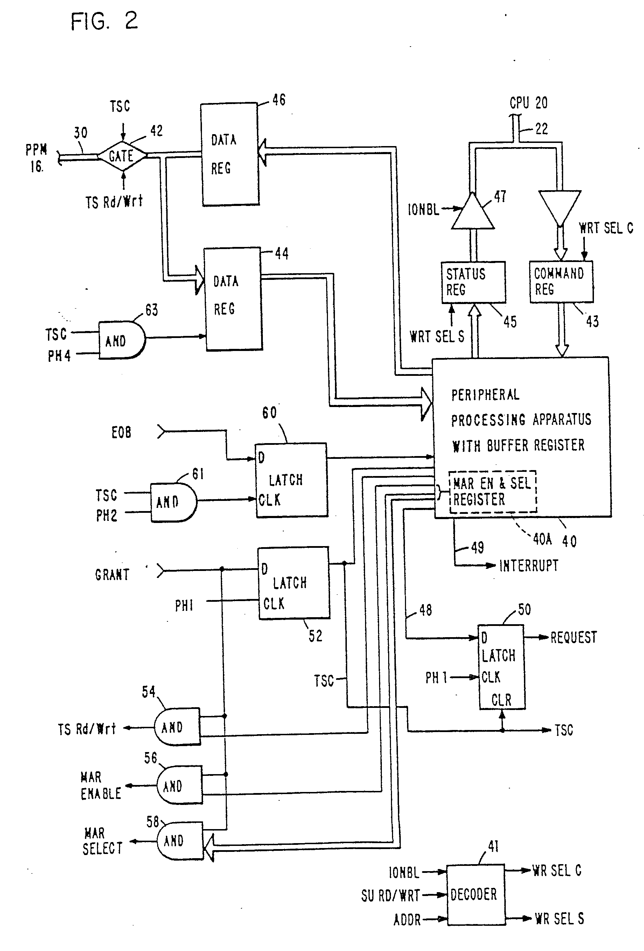

Referring now to FIGURE 2, a general schematic showing the preferred configuration of a peripheral adapter is shown. The peripheral device or processing unit 40 and its included buffer registers are not shown in detail. The processing unit would assume different configurations depending upon the peripheral function to be performed.

For example, if FIGURE 2 represented the scanner/printer peripheral adapter 12 of FIGURE 1, then the peripheral processing unit would have to contain a scanning mechanism, logic to process the scan data, and buffer storage to buffer the data until it was ready for transmission to the peripheral processing memory 16 of FIGURE 1. Also, the unit 40 if representative of the scanner/printer device 12c would have to include a paper handling mechanism and a printing mechanism plus the buffer storage for print data and print data processing electronics to drive the print head.

If the peripheral processing unit 40 represented the compressor/decompressor 13 or the encryptor/decryptor 14, it would simply consist of logic with buffer storage sufficient to store the quantity of video data being compressed/decompressed or encrypted/ decrypted. Similarly, if peripheral processing unit 40 represented the transmitter/receiver 15 of FIGURE 1, it would have to include a modulation/demodulation device to transmit or receive data as well as logic and buffer storage to organize the data for transmission/reception.

Thus, FIGURE 2 generally represents any type of peripheral adapter and describes how such a peripheral adapter is attached to the system of FIGURE 1. Control data from CPU 20 goes directly to the peripheral processing unit 40 over the bus 22. When the CPU wishes to send control information to the processing unit 40, it sends a supervisory read/write signal (Su Rd/Wrt) and the address of the adapter's command register 43 to the adapter. Decoder 41 in the adapter responds to the address and the Su Rd/Wrt signal and generates the write select C signal (WRT SEL C). This signal enables command register 43 to receive and store the control information over bus 22.

When CPU 20 wishes to check the status of the peripheral unit 40, it addresses status register 45. The CPU sends decoder 41 a IONBL signal, a Su Rd signal and the address of the status register 45 at the adapter. Decoder 41 generates the Wrt Sel S signal to gate status information from the PPU 40 into status register 45. The IONBL signal then gates driver 47 to pass the information in status register 45 back to CPU 20.

If the PPU 40 wishes to contact the CPU 20, it sends an INTERRUPT signal over signal line 49. The CPU will check the contents of status register 45, as described above, looking for an interrupt status bit. If the bit is present, it comfirms that the device was the source of the INTERRUPT signal.

The above described flow of information to PPU 40 has been control information. Data to be processed comes from the peripheral processing memory PPM 16 over bus 30 through bi-directional driver gate 42. Data read from the memory is stored in register 44 before it is loaded into the peripheral processing unit 40. Data to be written into the peripheral memory 16 is stored in data register 46 while it waits to be gated to the memory 16. Gate 42 is controlled by the Read/Write command for steering and by the time share cycle (TSC) signal which enables the gate 42.

After peripheral processing unit 40 has been initialized by commands from CPU 20 over bus 22, the first operation is to request access to memory 16. Processing unit 40 when it wishes access, provides a signal on line 48 to latch 50. At the next PHI clock signal, latch 50 is set. Its output is the request signal sent over line 26 (FIGURE 1) to the peripheral processing controller 10.

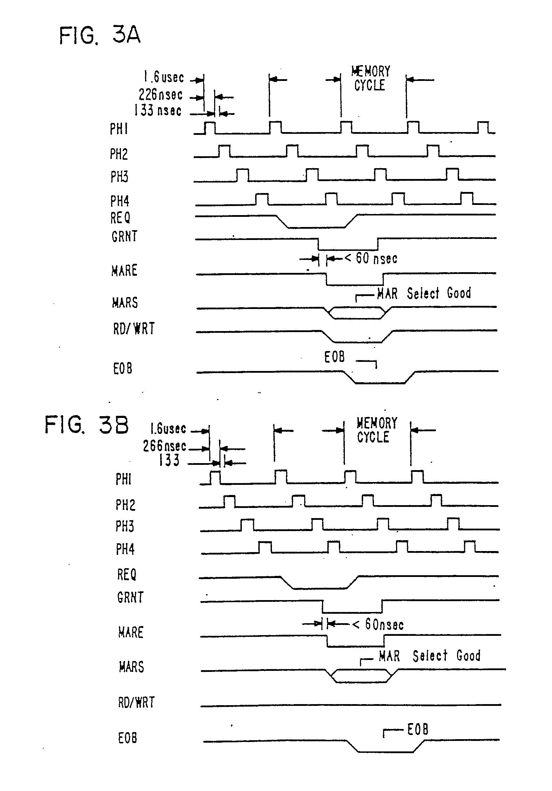

The signals used in FIGURE 2 are diagrammed in FIGURES 3A and 3B. FIGURE 3A shows a typical write operation, while FIGURE 3B shows a read operation. The clock signals have four phases, PH1 through PH4. A single memory cycle is measured from the rising edge of a PH1 clock pulse to the rising edge of the next PH1 clock pulse. The presence of a request signal out of latch 50 is shown in FIGURE 3A as a pulse REQ that shifts from a higher level to a lower level starting at the first PH1 clock pulse time and terminating at the next PH1 clock pulse time. The grant signal, received back from the peripheral processing controller 10 (FIGURE 1), will occur at PH3 time. The grant signal stays on until the next PH3 clock pulse.

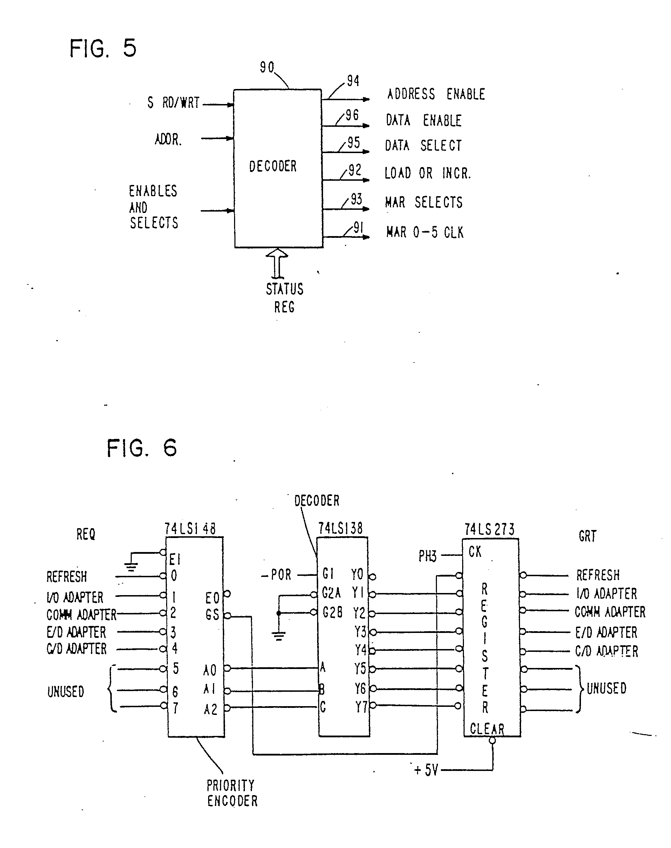

The circuits in peripheral processing controller 10 used to generate grant signals in response to request signals from the adapters are shown in FIGURE 6.

The circuit modules in FIGURE 6 are available from Texas Instruments as part numbers 74LS148, 74LS138 and 74LS273. Module 74LS148 is a priority encoder and will have a 3 bit output on lines A0, A1 and A2 representative of the highest priority of the 0-7 inputs. The highest priority is assigned to input 0 and descends to the lowest priority being assigned to input 7. The three bit output is the binary representation of the input line with the highest assigned priority that has a request signal present. For example, if inputs 1, 2 and 4 have a request signal present, the output on A0, A1 and A2 is 001. If requests had been present on inputs 3 and 4, the output would be 011 for input 3.

Decoder 74LS138 simply converts the 3 bit word from encoder 74LS148 back into a single line output. In other words only one of the lines Y0-Y7 has a signal output depending upon the 3 bit word input from A0, A1 and A2. The G1, G2A and G2B inputs are enabling inputs. So long as there is no power-on-reset signal on G1, and inputs G2A and G2B are grounded, decoder 74LS138 is enabled.

The one line of Y0-Y7 that has an output will set its associated stage in register module 74LS273 at PH3 clock time. The clear input to the module is held at +5 volts to enable the register. If the +5 volts is not present, the register is cleared. The stage, that is set at PH3 clock time, has a grant output that is sent back to its associated adapter or to the memory refresh apparatus (not shown). At the next clock cycle the PH3 pulse will reset that stage in the register unless the priority encoder and decoder modules still indicate that same request represents the highest priority request.

In FIGURE 2, the grant signal is received by the latch 52. Latch 52 will set at PH1 time when the grant pulse is present. The output of latch 52 is the time shared cycle (TSC) signal. The TSC signal enables gate 42 to connect the data bus 30 to the data registers 44 and 46 and clears the request latch 50. The TSC signal also notifies the processing unit 40 that the request for access has been granted.

When the processing unit 40 activates its request signal, it generates the Read/Write signal which is applied to AND gate 54. The processing unit 40 also generates the MAR address signals in the form of a MAR Enable signal and a MAR Select signal. These signals are applied to AND gates 56 and 58, respectively. AND gates 54, 56 and 58 are all enabled by the grant signal received back from the peripheral processing controller 10 (FIGURE 1).

The MAR address in the form of the MAR Enable and MAR Select signals are passed to the processing controller 10 in FIGURE 1. The Read/Write signal from AND gate 54 is used to steer data through the gate 42, FIGURE 2, drivers 30A and 30B, FIGURE 1, and to control the Read/Write function of peripheral processing memory 16.

If the operation is a Write operation, then the Read/Write signal will be a negative-going pulse remaining active as long as the grant signal is active (see FIGURE 3A). During this Write pulse, data flows from the data register 46 through gate 42 and through driver 30B (FIGURE 1) to PPM 16.

The process of request, grant, MAR select and memory addressing continues until the peripheral processing controller 10 in FIGURE 1 indicates the end of a block of data has been reached. At that time, the controller 10 generates the EOB signal which is received in FIGURE 2 by latch 60. When the EOB signal is present, the latch is set by the PH2 signal passed by AND 61. AND 61 is enabled during the time share cycle by the TSC signal. The set condition of latch 60 signals the processing unit 40 that end-of-block has been reached. The latch is reset at the next PH2 clock signal.

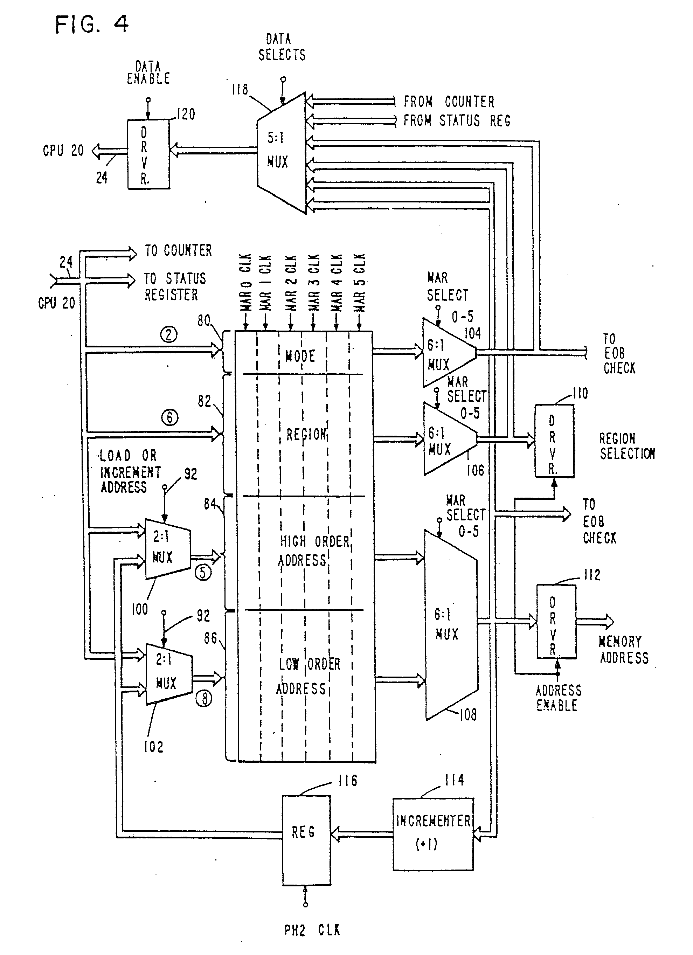

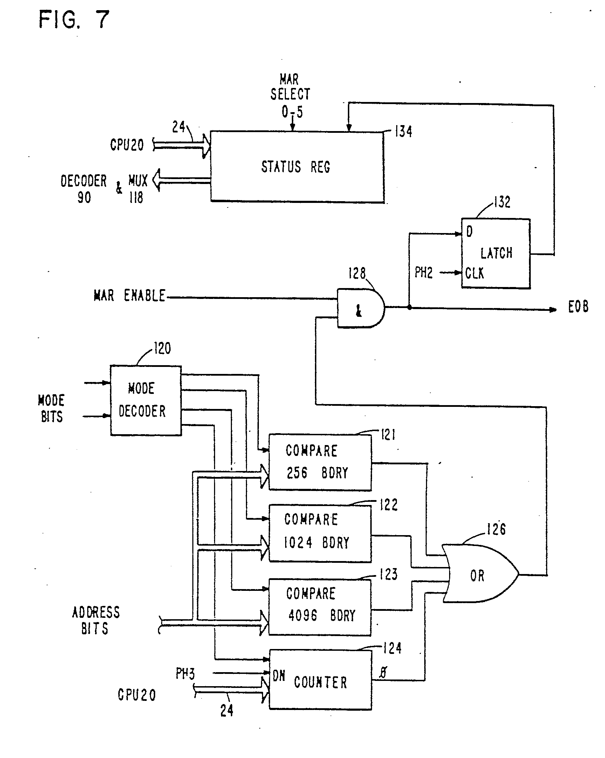

The peripheral processing controller 10 of FIGURE 1 is shown in detail in FIGURES 4, 5, 6, and 7. FIGURE 4 shows the memory address registers and the multiplex switches for gating address and mode information in and out of the MAR's. FIGURE 5 shows the decoder that decodes the commands from the CPU or the addresses from the enable and select lines from the peripheral adapters. The decoder generates the commands used throughout the peripheral processing controller. FIGURE 6 shows the priority modules which receive requests and issue grants. FIGURE 7 shows the end-of-block apparatus that generates the EOB signal which is sent back to the peripheral adapter.

As shown in FIGURE 4, the memory address registers (MARS) are divided into four sections, mode 80, region 82, high-order address bits 84, and low-order address bits 86. There are six MARS, MARO through MAR5. The mode, region, high-order address, and low-order address sections contain 2, 6, 5 and 8 bits, respectively. In effect, there are six memory address registers each containing 21 bits, two mode bits, six region bits, and thirteen address bits. These MARs are initialized by CPU 20 loading in bytes of control and address information over control bus 24.

The first byte of eight bits is loaded into the mode and region sections of the MAR addressed by CPU 20. Which MAR is addressed is decoded by decoder 90 in FIGURE 5. The decoder 90 will respond to an address signal over bus 24 from CPU 20 and generate a MAR 0-5 Clock signal 91 which will select one of the MARS 0-5. Accordingly, the first byte of eight bits is loaded into the register sections 80 and 82 because the CPU sends an address command to decoder 90 in FIGURE 5 that causes the decoder to generate one of the MAR 0-5 Clock signals. Five of the eight bits in the second byte are similarly loaded into the MAR section 84. These bits are the high-order address bits specifying an address in peripheral processing memory 16. Finally, the third byte is loaded into the MAR section 86. The third byte contains the low-order eight bits specifying an address in PPM 16. In this way, CPU 20 initializes the six MARs by addressing each MAR, which address is decoded into a MAR clock signal, and loading three bytes of address and control data over bus 24.

For the second and third bytes which contain the high-order and low-order address bits, the CPU 20 must also send a load command. Decoder 90 will then generate the load command over line 92 so that the multiplexers 100 and 102 will pass the bits of the address bytes to the MAR sections 84 and 86. As discussed hereinafter, multiplexers 100 and 102 may be switched to the increment address mode by the CPU 20 after the MAR groups 84 and 86 have been initialized. The increment mode is used to increment the address bits each time a peripheral device is given access. Thus, after initialization, the peripheral devices will work their way through a block of data as addressed by the incremented addresses in the MAR sections 84 and 86.

After all of the MARs have been initialized, CPU 20 signals the peripheral processing unit (PPU) 40 to begin its job assignment. The PPU requests access. If the request is granted, processing unit 40 then sends out the MAR Enable signal and the MAR Select signal to the controller 10 (FIGURE 1). Decoder 90 in FIGURE 5 is inside the controller 10 and decodes the enable and select signal to generate the MAR Select 0-5 signal 93. Each peripheral device in this manner selects its assigned MAR.

The MAR Select O-5 signal gates the multiplexing switches 104, 106 and 108. Multiplexing switch 106 passes the region address to the peripheral processing memory 16 (FIGURE 1). Multiplexer 108 passes the high and low order address bits to the peripheral processing memory. The region selection and address bits go to the memory when the drivers 110 and 112 are enabled by the decoder 90 in FIGURE 5. Decoder 90 generates the address enable signal 94 in response to the enable and select signals from the peripheral device.

At the same time that the address bits are supplied to the peripheral processing memory, they are also fed back to the incrementer 114. Incrementer 114 adds one to the address. At PH2 clock time the incremented address is then stored in register 116.

When the increment address command comes from the decoder 90, the incremented address in register 116 is stored back into sections 84 and 86 of the selected MAR. In this way, the address in a MAR is advanced by one to the next address position each time the peripheral device accesses the memory.

Also shown in FIGURE 4, is the multiplexing switch 118 and the driver 120. Multiplexing switch 118 and driver 120 are controlled by the decoder in FIGURE 5 in response to commands from the CPU 20. When CPU 20 wishes to check the status of the MARs, it sends a command to the controller which is decoded by decoder 90 (FIGURE 5). Decoder 90 generates a Data Select signal 95 to switch multiplexer 118 and a Data Enable signal 96 to activate driver 120. The selected data is gated through the multiplexing switch 118 and is driven by driver 120 on to bus 24 back to the CPU.

The only remaining function in the controller 10 (FIGURE 1) is the end-of-block (EOB) detection. This apparatus is shown in FIGURE 7. The end-of-block checking apparatus has four different modes of operation. The mode bits stored in the MAR register group 80 in FIGURE 4 control the mode of operation of the end-of-block checking apparatus.

When a selected MAR is read out through the multiplexers 104, 106 and 108 in FIGURE 4, the two mode bits from that MAR are passed to the mode decoder 120 in FIGURE 7. Decoder 120 decodes the two bits into one of four possible mode conditions and enables one of the comparators 121 through 123 or counter 124.

The comparators 121 through 123 also receive the low order address bits from the selected MAR. From these address bits, these comparators look for a boundary condition indicating the end of a block of data in memory.

Comparator 121 looks for an address position 255. Comparators 122 and 123 look for address positions 1,023 and 4,095 respectively. These comparators are monitoring the lowest order address bits for an all ones condition. Comparator 121 looks for the eight lowest order bits to be all ones; comparator 122 looks for the ten lowest order bits to be all ones; and comparator 123 looks for the twelve lowest order bits to be all ones. When a MAR is selected and its mode bits enables one of the comparators 121 through 123, that comparator will check to see if the MAR is addressing the boundary condition that the comparator is looking for. If it is, an end-of-block (EOB) signal from the selected comparator is passed by OR 126 to AND gate 128.

The fourth mode that the end-of-block apparatus may use is to count the number of accesses to the memory. If the MAR has mode bits indicating this mode, then counter 124 is enabled by the decoder 120 each time that MAR is selected during a memory access cycle. Counter 124 is loaded by CPU 20 over bus 24 with a count specifying the number of accesses necessary to process a data block. At the same time, the MAR would be set up by the CPU 20 with the initial address starting the block. Each time the MAR using this fourth mode bits is selected, the mode decoder 120 in FIGURE 7 will enable the counter 124 to receive a PH3 clock pulse to count the counter down. When the counter 124 is counted down to zero, the end of the block condition has been reached. The zero condition from counter 124 is collected by OR 126 and also passed to AND 128.

The end-of-block condition out of OR 126 is passed by AND 128 after MAR Enable is active. There will be a MAR Enable during each time share access. If there is an end-of-block condition detected, during the period when the MAR Enable signal is active, then the EOB signal is sent to the peripheral adapters. Then the peripheral device having access detects the EOB signal.

The end-of-block signal is also used to set latch 132. Latch 132 is set at PH 2 clock pulse time when the EOB signal is present. Latch 132, in turn, loads an EOB bit condition into the status register 134. Each stage of the register 134 is associated with one of the six MARs in FIGURE 4. Accordingly, if an end-of-block condition is detected for that MAR, an EOB bit is loaded into that stage of the status register 134 associated with ths MAR.

When a stage of the status register 134 is set, it indicates to the deocoder 90 in FIGURE 5 that a particular MAR has reached an end-of-block condition. The decoder inhibits the selection of that MAR thereafter until the MAR is again initialized and the status register stage for that MAR is reset by CPU 20.

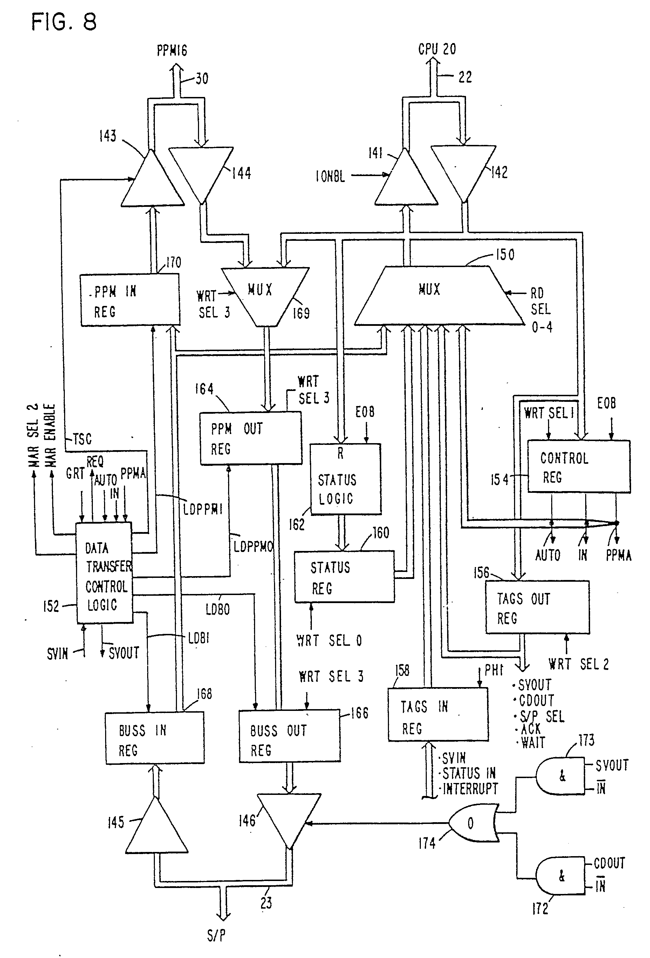

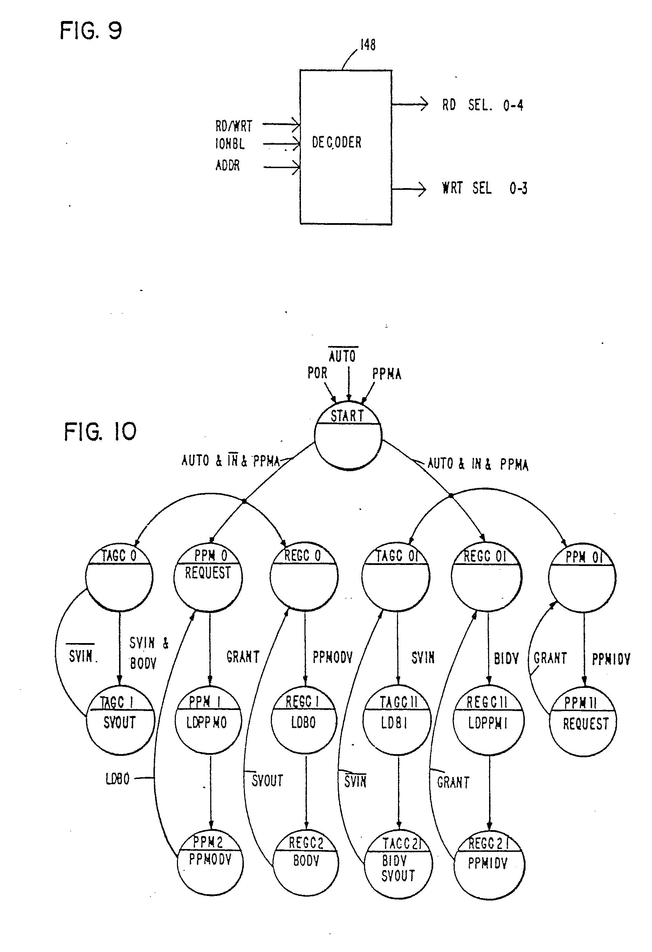

Referring now to Figure 8, a more detailed example of a specific adapter is shown. In particular, the adapter of Figure 8 is the I/O adapter 12 that connects the scanner and printer modules 12a-12c with the system of Figure 1. The control channel 22 connects to the adapter via drivers 141 and 142. The data channel 30 connects the adapter to the peripheral processing memory 16 (Figure 1) via the drivers 143 and 144. The scanner and printer modules are connected to the adapter via bus 23 through drivers 145 and 146. The other input/output lines labeled in Figure 8 are control lines connected between the adapter and the CPU 20 or between the adapter and the scanner/printer modules. Exceptions are the read and write select signals which are generated by the decoder 148 in Figure 9.

The inputs to decoder 148 are signal lines from the CPU 20. Decoder 148 in Figure 9 generates the Read Select 0-4 signals used to control the multiplexing switch 150 in Figure 8 when reading information from the adapter or scanner/printer modules to CPU 20. Write Select 0-3 lines are generated by decoder 148 (Figure 9) when CPU 20 wishes to write control information into four selectable registers in the adapter.

The I/O Adapter of Figure 8 may be viewed as a device having two modes of operation, automatic and supervised. The supervised mode is under control of CPU 20. In this mode, CPU 20 loads address and control information into the I/O adapter and the scanner/printer modules. The automatic mode of operation is used for direct transfer of data between the scanner/printer modules and the peripheral processing memory 16. It is under the control of data transfer logic 152.

Examining the supervised mode of operation first, the CPU 20 sets up the control register 154, the TAGS OUT register 156, the TAGS IN register 158 and the status register 160. Control register 154 contains bits indicating the mode of operation of the adapter, the direction of data flow in or out relative to the PPM 16 or the CPU 20, and whether space in the PPM is available (PPMA). These signal bits are gated into control register 154 by the WRT SEL 1 signal from decoder 148.

The TAGS OUT register 156 contains digital bits which represent control data. The TAGS OUT register may contain a service out (SVOUT) bit, a command out (CDOUT) bit, an acknowledge (ACK) bit, a WAIT bit or a scanner/printer select (S/P SEL) bit. These bits are loaded in from CPU 20 when a WRT SEL 2 signal from decoder 148 gates register 156. The TAGS IN register 158 may contain the service in (SVIN) bit, an INTERRUPT bit or a STATUS IN bit. These signals come from the scanner/printer module and, if present, are loaded in register 158 by a PH1 clock pulse every clock cycle.

The status register 160 is set by the WRT SEL O signal from decoder 148 (Figure 9). The status register will contain bits indicating the EOB (end-of-block) signal has been received or may contain bits indicating various error conditions. The detection of error conditions is not a part of the invention and is accordingly not discussed further herein. Resetting of the status register is controlled by the status logic 162 which responds to the EOB signal from the peripheral processing controller 10 (Figure 1) and to initialization conditions from CPU 20.

CPU 20 may also write control information to a scanner/printer module via the PPM OUT register 164 along with the multiplexing switch 168, are all selected by a WRT SEL 3 signal from decoder 148 (Figure 9). Thus, when a WRT SEL 3 signal is present there is a straight connection from CPU 20 through to BUS OUT register 166 via the multiplexing switch 168 and PPM Out register 164. The control information is gated to a scanner/printer module by driver 146 when a command out (CDOUT) signal and an IN signal are present. The scanner/printer module to receive the control information is addressed by the scanner/printer select address (S/P SEL) from the TAGS OUT register 156.

Control information at a scanner/printer module may be read back to CPU 20 via the BUS IN register 168 and the multiplexing switch 150. The information is gated back to CPU 20 by first loading it into the BUS IN register 168. The CPU then signals decoder 148 to bring up the RD SEL signal to pass the information from BUS IN register through multiplexing switch 150.

The PPM IN register 170 is not used during the supervised mode. Register 170 is used to buffer video data information between the BUS IN register and the peripheral processing memory 16. Its function will be described hereinafter when the AUTO mode operation is explained.

The operation of the adapter in Figure 8 will be explained by going through typical supervised and automatic operations. The supervised operations refer to conversations between CPU 20 and a scanner/printer module. Automatic operations refer to data flow between the scanner/printer module and the peripheral processing memory 16.

As a first example, CPU 20 will set up control information in one of the scanner/printer modules. The CPU first sends a signal, which is decoded by decoder 148 as WRT SEL 1, and loads in control information into the control register 154. The control information in this example would be not-AUTO mode, not-IN mode and PPMA (Peripheral Processing Memory Available). Next, CPU 20 generates a WRT SEL 2 signal and loads the TAGS OUT register 156 with the S/P SEL bit for the scanner/printer module to which control data is to be sent. Then CPU 20 generates the WRT SEL 3 signal and puts the control data into the BUS OUT register 166 via the multiplexing switch 168 and the PPM OUT register 164.

Next, CPU 20 loads a CDOUT bit to the TAGS OUT register 156 with the WRT SEL 2 signal. The CDOUT bit is at a different position in the register from the S/P SEL bit. To preserve the S/P SEL bit, the bit may be rewritten into the TAGS OUT register at the same time as the CDOUT bit. Alternatively, only the CDOUT bit may be written.

With the CDOUT bit present in the TAGS OUT register, the CDOUT line at AND gate 172 is on and the IN line for AND gate 172 is on. Therefore, AND 172 has an output which is passed by OR 174 and enables driver 146. The control data in register 166 is then passed by the driver 146 to the scanner/printer module selected by the S/P SEL bit.

When the scanner/printer module receives the control data, it responds with a STATUS IN signal to register 158 and a status information byte back over bus 23 to the BUS IN register 168. Driver 145 simply passes the information from bus 23 into the 8US IN register 168. A read select signal from the CPU switches MUX 150 to pass the BUS IN register contents to CPU 20 through the driver 141. Driver 141 is enabled by an I/O enable (I/O NBL) command from CPU 20 when it wishes to read the information. The scanner/printer module notifies CPU 20 about the presence of status information by raising a STATUS IN bit in the TAGS IN register 158. When the CPU 20 reads the STATUS IN bit through MUX 150 from the TAGS IN register 158, it will next switch the MUX to read in the BUS IN register contents. When the CPU 20 has received the status information it acknowledges the status information by dropping the CDOUT bit in the next clock cycle. CPU 20 resets the CDOUT bit in the TAGS OUT register 156. This drops the CDOUT signal and signals the scanner/printer module that the status inforMation was received by the CPU.

The above-described process is the manner in which the CPU 20 communicates with the scanner/printer modules to set up the modules for a processing operation. This sequence is initiated by the CPU 20. The scanner/printer modules can initiate communication with CPU 20 by raising an INTERRUPT bit.

The interrupt operation occurs when the scanner/printer module detects it has completed the job assigned to it by the CPU 20. For example, it may have detected the end of a scan line or a print line, or it may have processed all of the data in a block of the peripheral processing memory 16 and received the end-of-block signal back from the controller 10 (Figure 1). The interrupt operation starts with the printer or scanner module raising the INTERRUPT tag. The INTERRUPT bit is set in the TAGS IN register 158 at PH1 clock time. When CPU 20 reads the registers and detects the INTERRUPT tag, it will respond with an ACKNOWLEDGE tag in the TAGS OUT register 156.

When the scanner/printer module sees the ACKNOWLEDGE tag in the TAGS OUT register 156, it drops the INTERRUPT tag. Thus at the next PH1 clock time, the INTERRUPT bit in the TAGS IN register 158 is reset. The next time the CPU 20 checks the TAGS IN register and sees that the INTERRUPT tag has dropped, it again responds with an ACKNOWLEDGE tag in the TAGS OUT register. This completes the interrupt operation.

The scanner/printer module may also signal termination of a data transfer operation. To do this, the module places status information in the BUS IN register 168 and raises the STATUS IN bit. CPU 20 reads the STATUS IN bit in register 158 and reads out the status information via the multiplexing switch 150. CPU 20 then raises the SVOUT bit in register 156 to signal receipt of the status information. The scanner/printer module then drops STATUS IN, and the CPU thereafter drops SVOUT. TAGS IN register 158.

So far, the adapter in Figure 8 has been described in the supervised mode of operation where the CPU 20 controls the adapter and talks to the scanner or printer module. In the automatic mode of operation, the adapter is controlled by the data transfer control logic 152. In this mode of operation, data flows between the peripheral processing memory 16 and the scanner or printer module.

In the automatic (AUTO) mode the only registers used are the PPM IN register 170, the PPM

**0 055 374**

OUT register 164, the BUS IN register 168 and the BUS OUT register 166. The PPM OUT register and the BUS OUT register act as a two-step buffer when data is flowing from PPM 16 to a printer module. Likewise, the BUS IN register 168 and the PPM IN register 170, act as a two-step buffer when video data is flowing from a scanner module to PPM 16. Using a two-step buffering arrangement is not mandatory, but it does reduce the likelihood that a scan/print operation will be interrupted because of data flow interruption.

The gating of data through the in registers 168 and 170 or through the out registers 164 and 166 is controlled by the data transfer control logic 152. The operation of this logic is best understood by referring to Figures 8 and 10 simultaneously. Figure 10 is a state diagram for the data transfer control logic 152. In Figure 10, the states are represented by circles. The conditions that cause a change in state are indicated on the connection lines between the circles. If there is no condition indicated, the logic will automatically transition from one to the next state during the next clock cycle. Otherwise, the logic will transition from one to the next state upon the occurrence of the condition and the clock cycle.

In the state diagram, the right hand half of the diagram corresponds to the operation when data is flowing into the PPM. The left hand half of the state diagram shows the states when data is flowing out of the PPM and in to the scanner or printer module. In each of these halves, the tag control (TAGC) states, the PPM data gating (PPM) states and the register control (REGC) states are arranged in columns and operate in parallel as their conditions are satisfied.

Referring now to Figures 8 and 10, the I/O adapter operates in the AUTO mode in the following manner. The start state is entered when a POR (power on reset) signal, a PPMA signal or not-AUTO mode signal is present. When the auto mode condition is present, the logic will branch right or left in the state diagram, depending on whether the data flow is into the PPM or out of the PPM, respectively. If the data flow is to be in to the PPM, then the states Tag Control O In (TAGCOI), Register Control O In (REGCOI), and PPM O In (PPMOI) are entered. When the scanner module generates the service in signal (SVIN), logic 152 transitions to state TAGC1I. In this state, the Load bus In (LDBI) signal is generated, and the video data is loaded into BUS IN register 168.

In the next cycle, state TAGC2I is entered. In this state, the bus In Data Valid (BIDV) signal and the SVOUT signal are generated. The SVOUT signal goes back to the scanner module to acknowledge the loading of the BUS IN register. The BIDV signal is the condition which causes the logic to pass from state REGCOI to REGC1I. In state REGC1I the Load PPM IN signal (LDPPMI) is generated.

The LDPPMI signal is used to gate the PPM IN register 170. When this signal is present, the contents of the BUS IN register 168 is transferred to the PPM IN register 170. In the next clock cycle, logic 152 passes from state REGC1I to REGC2I and generates the PPM IN Data Valid (PPMIDV) signal. At the same time, the SVOUT signal, which was previously generated in state TAGC2I, is acknowledged by the scanner module dropping the service in signal (SVIN). When SVIN drops, the tag control logic moves from state TAGC2I back to state TAGC0I, ready for the next SVIN signal which will cause the loading of the BUS IN register with the next word of scan data.

The PPM0I state transitions to the PPM1I state upon the occurrence of the PPMIDV signal generated in state REGC2I. In state PPM1I, the request signal is generated and passed to the controller 10 in Figure 1 (see also Figure 6). When the grant signal comes back from controller 10, the PPM states change from PPM1I to PPM0I. At the same time, the register control states in logic 152 change from REGC2I to REGC0I. The receipt of the grant signal also causes generation of the time share cycle (TSC) signal at PH1 clock time (as previously described for latch 52 in Figure 2). Similarly, the grant signal also triggers the generation of the MAR enable and MAR select signal (as previously described for ANDs 56 and 58 in Figure 2). Typically the MAR select signal is a predetermined hardwire connection rather than a programmable selection. In other words, the I/O adapter will always generate the MAR Sel 2 signal that selects MAR 2. The AUTO-IN-PPMA states will continue to cycle as just described until the scanner module has completed sending data to PPM 16.

When the flow of video data is out of the PPM 16 and into the printer module, the states used in the state diagram of Figure 10 are on the left hand side of the diagram. In this condition, the state transition from the start state to the TAGCO state, the PPMO state and the REGCO state when an AUTO, a not-IN and a PPMA condition exists.

In the PPMO state, the request signal is generated and sent to the controller 10. When the grant signal is returned by the controller to the data transfer control logic 152, the logic transitions to state PPM1. In the PPM1 state, the load PPM OUT signal (LDPPMO) is generated. This signal gates data received from the PPM 16 into the PPM OUT register 164.

The grant signal that causes the transition to PPMI also generates the MAR enable and MAR select 2 signal (as previously described for Figure 2). The grant signal gates the PPM OUT register to receive data and also gates the address from the selected MAR to retrieve the data from the PPM 16 that is read into the PPM OUT register 164.

At the next clock cycle, the transfer control logic 152 transitions from PPM1 to PPM2. In state PPM2, the transfer control logic generates the PPM OUT Data Valid (PPMODV) signal. The PPMODV signal is used to transition from state REGC0 to REGC1. In state REGC1, the load bus Out (LDBO) signal is generated. The LDBO signal enables BUS OUT register 166 to receive the data from PPM OUT register 164.

The LDBO signal also causes logic 152 to transition from state PPM2 to PPM0. In PPM0 state the next request signal. In the next clock cycle the register control states transitions from REGC1 to REGC2. In state REGC2, the bus Out Data Valid condition is generated.

In state TAGC0 logic 152 looks for the BODV condition and the SVIN signal from the printer module. When SVIN and BODV conditions are present, the logic 152 transitions from a state TAGC0 to TAGC1. In TAGC1 state the SVOUT signal is generated. The SVOUT signal, combined with the not-IN mode satisfies AND 173 and enables driver 146 to pass the contents of BUS OUT register 166 to the printer module. SVOUT also causes register control state to transition from REGC2 back to REGC0. Finally, SVOUT signal is also sent to the printer module, and the printer module drops the SVIN signal. With the SVIN signal down or not present, logic 152 transitions from state TAGC1 back to state TAGC0. This sequence of states continues until the printer module receives all the video data it needs from PPM 16.

When an end-of-block condition is detected by the controller 10, the PPM Available (PPMA) bit is reset in the control register 154. The not-PPMA condition causes the logic to revert to the START state. The logic will stay in the START state until PPMA comes back and the AUTO mode comes back.

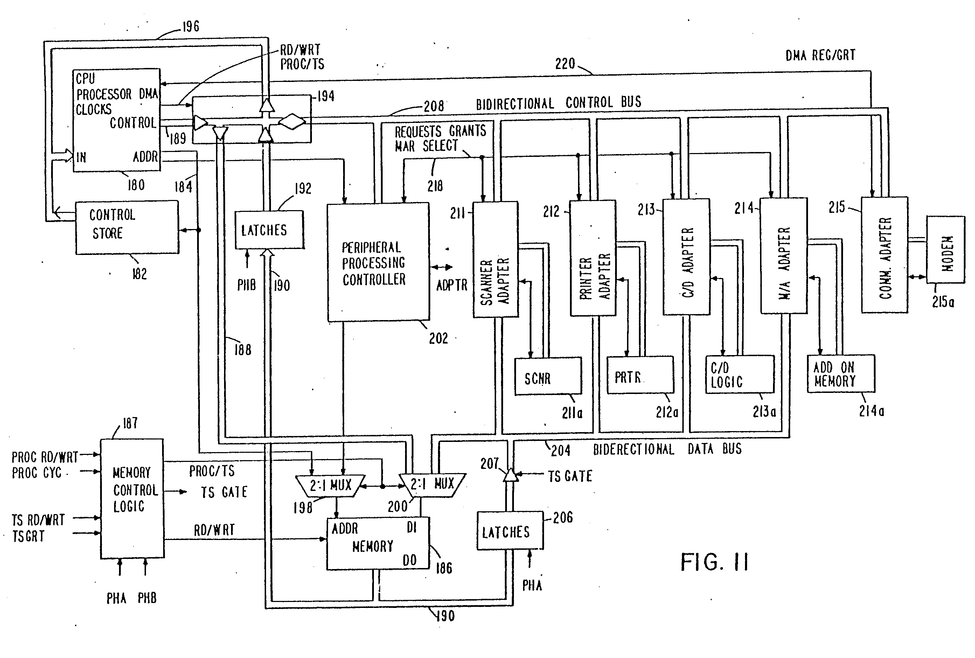

Referring now to Figure 11, an alternative embodiment of the invention is shown. In this embodiment, the peripheral devices still process data directly with a memory. However, the memory has a fixed amount of space allocated as work area memory for the CPU. Also, one of the devices communicates its data over the control bus rather than the data bus. Finally the peripheral processing controller uses fixed size memory blocks rather than programmable size blocks. The controller can be initialized by the CPU to select different regions of memory in which the fixed size blocks are located.

Just as in Figure 1, the single lines indicated in Figure 11 represent control lines interconnecting the functional blocks of the system. For example control line 218 represents the requests, grants and MAR select signals that pass between the peripheral processing controller 202 and the adapters 211 through 214. The request/ grant lines 220 from the communications adapter 215 go to the CPU 180. This is because the communications adapter is controlled by the CPU 180 instead of the peripheral processing controller 202 in this embodiment. Even though data flow to the communication adapter 215 is supervised by CPU 180, the CPU is not processing any video data used by the communication adapter. The CPU is simply controlling the flow of data between the communication adapter and the memory 186.

Memory 186 is accessed in alternate cycles by CPU 180 and by the peripheral processing controller 202. Memory control logic 187 performs this function. One of the memory cycles is gated by phase A clock time and the other is gated by phase B clock time. This is simply accomplished by using a latch that is set by PHA and reset by PHB. The output of the latch switches MUX&s 198 and 200 as described hereinafter.

Memory control logic 187 also responds to Proc RD/WRT, Proc Cycle, TS RD/WRT and TSGRT. The Proc signals are from the CPU and indicate that in the processor cycle whether a read or write operation is required. The TS signals are from controller 202 and indicate an adapter has been granted access to memory 186 and whether a read or write operation is desired. Control logic 187 decodes these signals to generate the TS Gate signal and the RD/WRT signal. The TS Gate signal is used to enable driver 207 to pass information to the adapters 211 to 214. The RD/WRT signal tells the memory whether a read or write operation is being performed.

In operation, CPU 180 can address control store 182 for program instructions. Control store 182 would typically be a read only store. The address information from CPU 180 goes out over lines 184 to the control store 182. The control store 182 then reads back into the in port of CPU 180 the control program stored in control store 182.

Memory 186 is preferably an 8K memory. A 1/2 K of this memory is allocated to CPU 180. CPU 180 addresses its 1/2 K portion of memory 186 via address lines 184. CPU 180 sends information to be stored in memory 186 over bus 189, through bus steering 194 and over bus 188. If the CPU is reading information from memory 186, it receives the information over bus 190 through latches 192, bus steering 194 and over input bus 196.

Memory 186 is accessed in alternate memory cycles either by the CPU 180 or by the peripheral devices. In one cycle, MUX 198 and MUX 200 are switched to pass addresses from the CPU to the memory 186 and data from the CPU to the memory 186. In the next cycle, MUX 198 and MUX 200 are switched to receive address information from MARs inside the peripheral processing controller 202 and data from the peripheral devices over data bus 204. Thus every other cycle of the memory is given to the CPU 180 to control. The other cycle is time-shared by all of the peripheral devices.

The output bus 190 from memory 186 goes to both latches 192 and latches 206. Latches 190 are loaded at PHA clock time while latches 206 are loaded at PHB clock time.

Bus steering 194 is provided to steer control information from the latches 192 or from the CPU 180 either to the bidirectional control bus 208 or to the input bus 196 of the CPU. When the CPU is reading its allocated space in memory 186, bus steering 194 steers the information from latches 192 to input bus 196 for the CPU. When the CPU is acting to give the communications adapter direct memory access during a CPU cycle of the memory, the bus steering steers the data received from latches 192 out on the bidirectional control bus 208 to the communications adapter 215. In this instance, the control bus 208 is carrying video information instead of control information.

Similarly, when the communication adapter is sending video information received from the modem, the adapter sends the video information to the memory 186 via bus 208, bus steering 194 and bus 188.

If CPU 180 is reading control information from the adapters 211 through 215, bus steering is gated such that the control information coming over bidirectional control bus 208 is passed to input bus 196 for the CPU. If the CPU is writing control information to the controller 202 or the adapters 211 through 215, bus steering 194 passes the control information from output bus 189 of the CPU to bidirectional control bus 208. Thus the bus steering 194 consists of gated drive circuits driven by read/write signals or CPU/TS cycle allocations signals from CpU 180.

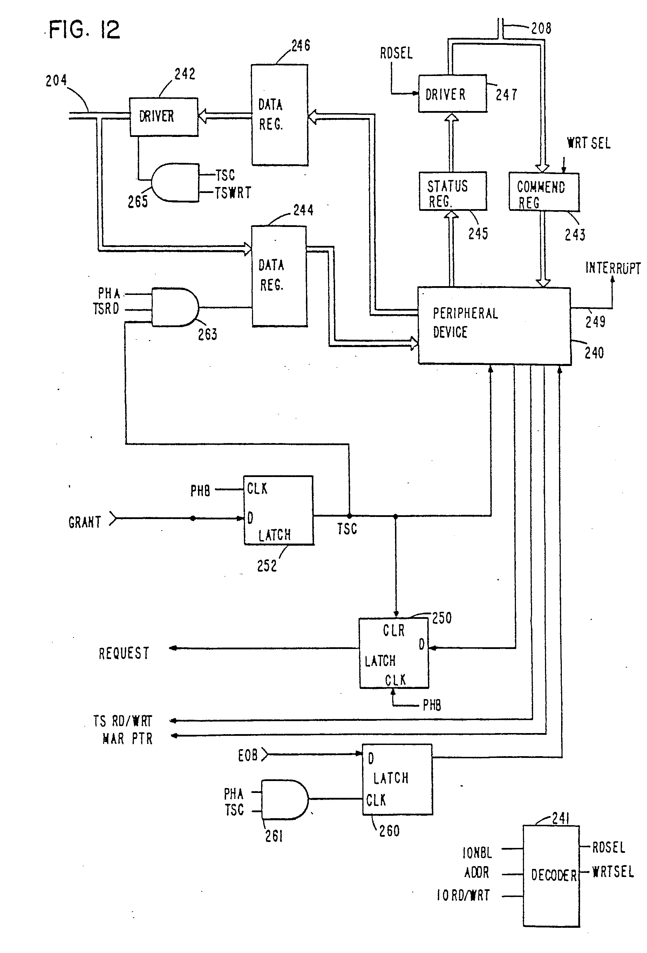

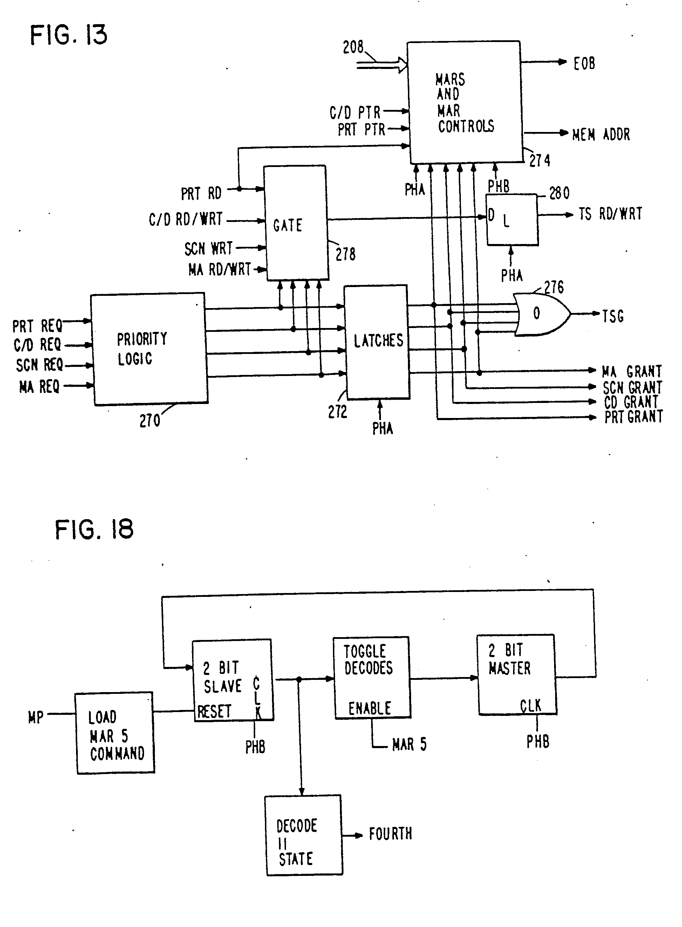

Each of the adapters 211 through 214 operate in substantially the same manner as previously described for Figure 2. The slight differences will be discussed shortly with reference to Figures 12 and 13. Figure 12 shows an adapter and Figure 13 shows the peripheral processing controller 202. Each of the adapters 211 through 214 adapts the control bus and the data bus to interface with the hardware function performed by the peripheral device connected to the adapter. The scanner adapter 211, the printer adapter 212, the compression/decompression adapter 213 and the minimum attendance adapter 214 adapt these buses to connect them to scanner 211A, printer 212A, compression/decompression logic 213A and add-on-memory 214A. The minimum attendance buffer 214 and add-on-memory 214A are additional functions not previously shown in Figure 1. The minimum attendance function merely provides additional storage space to store video data. Add-on-memory 214A, tape storage or disk storage might be used.

The communications adapter 215 connects the modem 215A to the control bus 208. As previously described, transmitted video data, instead of being passed over the data bus 204 to the communications adapter 215, is passed over the control bus 208 to the communications adapter 215. It is common to use a communication adapter attached to a single bus. Therefore, for this one adapter it may be more attractive to use an established communication adapter with a single bus for both data communications and control communications.

When a DMA (Direct Memory Access) cycle is granted by the CPU during the reading information between communication adapter 215 and memory 186, the data flow is over control bus 208, through bus steering 194 and over input memory bus 188A DMA cycle occurs during a processor access cycle to memory 186 rather than during a time share (TS) access cycle. CPU 180 simply allocates its cycle for use by the communications adapter 215.

The function of the adapters 211-214 is similar to the function of the adapter in Figure 2. However, the differences in detail may be more clearly seen by referring now to Figure 12. Figure 12 is an example of an adapter that may be used for any of the adapters 211 through 214.

The control information passing over bidirectional bus 208, goes to command register 243 or comes from status register 245 through driver 247. The processing logic or apparatus 240 responds to the commands 243 to perform the scanning, printing, compression or decompression or memory storage function depending upon the peripheral device represented. The commands that enable the driver 247 or the command register 243 are decoded by decoder 241. Decoder 241 receives the I/O enable (IONB1), the address of the register 243 or 245 and the I/O read/write signal, all from CPU 180. Decoder 241, command register 243, status register 245, driver 247 operate in substantially the same way as previously described for decoder 41, command register 43, status register 45 and driver 47 in Figure 2. Peripheral processing apparatus 240 is slightly different in its generation of the time share read/write signal and the MAR select signal, as will be discussed hereinafter.

When the CPU wishes to send control information to peripheral device 240, it sends an I/O read write signal (IO RD/WRT) and the address of the adapter's command register 243 to the adapter. Decoder 241 in the adapter responds to the address and the IO RD/WRT signal and generates the write select (WRT SE1) signal. This signal enables command register 243 to receive and store the control information over bus 208.

When CPU 180 wishes to check the status of the peripheral device 240, it addresses status register 245. The CPU sends decoder 241 an IONBL signal, an IO RD/WRT signal and the address of the status register 245 at the adapter. Decoder 241 generates the read select RDSEL signal to gate driver 247 to pass the information in status register 245 to CPU 180 over bus 208.

Data into or out of the peripheral processing apparatus goes through data registers 244 or 246. Incoming data is stored in data register 244 at PHA clock pulse time when there is a time shared cycle (TSC) signal and a time shared read (TSRD) signal present at AND 263. Data from the peripheral processing apparatus is buffered in register 246 before being driven out by driver 242. Driver 242 is enabled by AND 265 when there is a time shared cycle (TSC) and a time shared write (TSWRT) signal present.

The TSC signal is generated in response to the request-grant sequence. The request signal is triggered by the peripheral processing apparatus 240 applying a signal at the data input terminal of latch 250. At phase B clock time, the latch 250 sets and generates the request signal. The request signal goes to the controller 202 (Figure 11). If the request is granted by the controller, the grant signal comes back to the data input terminal of latch 252. At phase B clock time if the grant signal comes up, latch 52 is set, and the time shared cycle signal is generated. At the next phase B clock time, latch 252 resets and the time shared cycle signal ends. The time shared cycle signal is also used to clear the request latch 250. Also, the time shared cycle signal is passed back to peripheral processing apparatus to indicate that a time shared cycle has been granted.

At the same time that the peripheral processing apparatus 240 generated the request signal to latch 250, it also generated the time shared read (TSRD) signal and the MAR pointer (MAR PTR) signal. These signals are passed to the controller 202 at the same time as the request. This differs from the adapter in Figure 2 which did not pass these signals until the grant signal had been received back from the controller.

When the controller 202 (Figure 11) detects that an end of block condition exists, the EOB signal is sent by the controller back to the adapter to the data input terminal of latch 260. If the EOB signal is present at latch 260, and AND gate 261 is enabled, latch 260 sets. AND 261 is enabled at phase A clock time if it is a time share cycle as indicated by latch 252. When latch 260 sets, it signals the peripheral processing apparatus 240 that an EOB condition has been detected at the controller. The processing apparatus 240 then sends an interrupt signal back to CpU 180 over line 249.

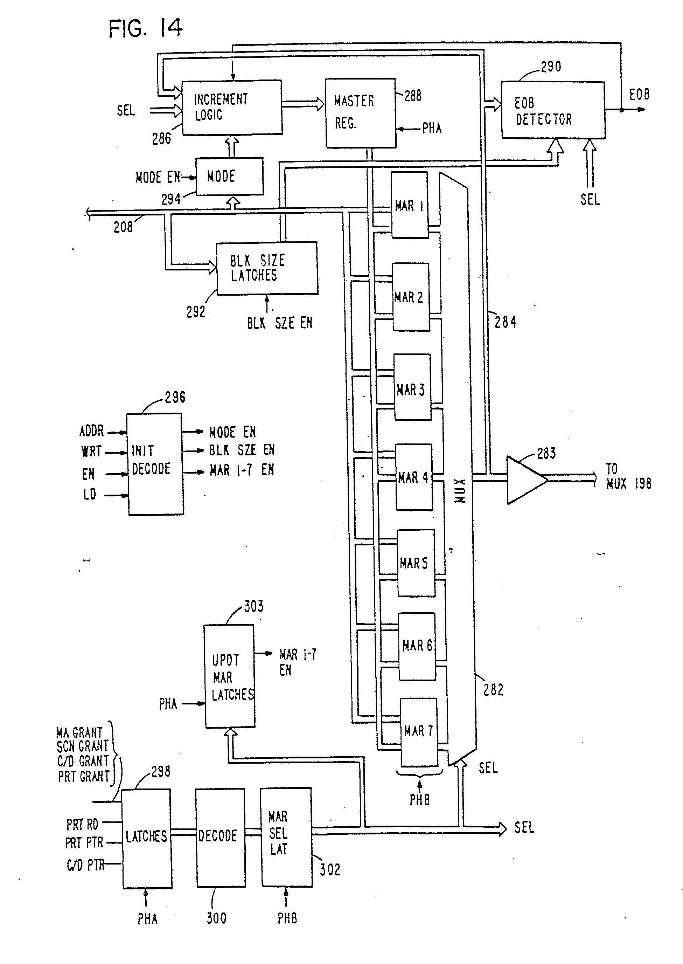

Referring now to Figure 13, the peripheral processing controller 202 of Figure 11 is shown. The memory address registers, MARS, and memory address register controls used in the controller of Figure 13 are shown in detail in Figure 14. The request signals from the adapters are processed by priority logic 270. The priority ranking from high to low is printer, compressor/decompressor, scanner and minimum attendance. Priority logic 270 will have a signal on one of its four output lines indicating the request representing the highest priority. The signal on one of the lines from the logic 270 sets one of the latches 272 at PHA clock time. Grant latches 272 indicate which adapter has been granted access. Each of the grant lines is passed to the MAR controls 274 and to OR 276. OR 276 indicates a time share grant has been generated.

The output from the priority logic 270 also enables a gate 278 which passes a read/write signal to latch 280. Latch 280 is set by the phase A clock signal and indicates whether a time share read condition or a time share write condition exists. The TSRD or TSWRT signal goes to memory control logic 187 (Figure 11) to control memory read or write. Since the printer is only going to read data, it only has a print read signal as input to gate 278. Similarly, since the scanner is only going to write data into memory, it only has a scan write signal into gate 278.

MAR controls 274 in addition to receiving the grant signals, also receive pointer signals. A compress/decompress, two-bit pointer (C/D PTR) and a printer pointer (PRT PTR) signal are received from adapters 213 and 212, respectively. In addition, the print read signal is passed to the MAR controls also as a pointer. These signals point to MARS which are to be selected by the MAR controls. The MARs and MAR controls also receive control information over the control bus 208. The MAR controls generate the memory address signal which is passed to MUX 198 (Figure 11) to address the byte in memory 186 which is desired. The MAR controls also generate the end of block (EOB) signal which is passed back to the adapters.

The MARS and MAR control are shown in detail in Figure 14. A selected MAR is used to address a section of memory until a block of data has been processed by a peripheral device through its adapter. The MAR leads the device through a block of memory by having the address of the memory updated in the MAR during each memory access cycle. Accordingly, as the contents of the MAR are read out through MUX 282 to address the memory 186, they are also fed back over bus 284 to increment logic 286. In the increment logic, the address is incremented by one and stored in the master register 288. The updated address for the selected MAR is then loaded back into its MAR at the phase B clock time.

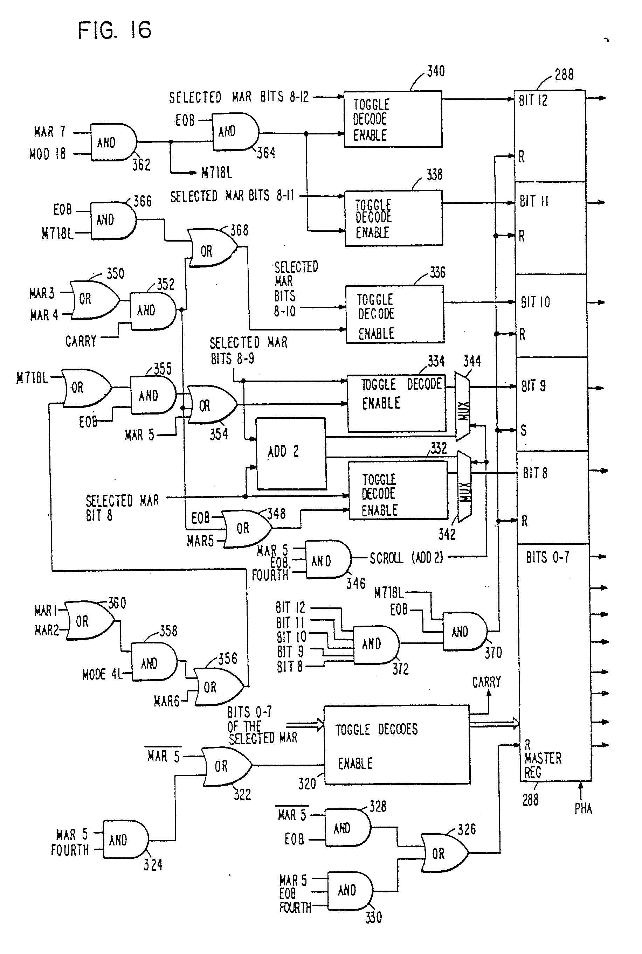

The increment logic 286 not only increments the low order count representative of the address, but can also be used to increment the region portion of the address. Thus, the increment logic 286 not only advances memory access through a block of memory, it also may be used to jump memory access between blocks of memory and start new blocks of memory for access. The operation of the increment logic will be described hereinafter with reference to Figure 16.

The memory addresses from the MARS are also passed to the end of block detector 290. The EOB detector may be set to predetermined block sizes. Then, depending upon the mode of operation, detector 290 will look for specific address counts to indicate an end of block condition. The EOB condition goes back to the adapter and is also used by the increment logic as will be discussed hereinafter.

The size of the block detected by the end of block detector 290, is specified by the block size loaded into latches 292 by computer 180 over bus 208. The computer 180 also sets up the mode register 294 over bus 208. The mode register indicates the mode of operation to the increment logic. By this means, the MARS may be programmably controlled to perform different predetermined block size operations and to move data between blocks.

All the initialization of the MARS and MAR controls in Figure 14 is accomplished by CPU 180. The command lines, address (ADDR), write (WRT), enable (EM) and load (LD) all come from CPU 180 to initial decode 296. Initial decode then generates the mode enable (MODE EN) signal to load the mode information into mode register 294. Decode 296 also generates the block size enable (BLK SZE EN) signal to load the block size word from CPU 180 into latches 292. Decode 296 also generates a MAR 1-7 EN (enable) signal to load the initial addresses into MARS 1 through MAR 7. The initial addresses of these MARS in the low order eight bits is always 0. The higher order five bits may be controlled by CPU 180 to specify different regions of memory to which the MARS will grant access.

After initialization, the adapters select MARS through the latches 298. Latches 298 at phase A clock time store the grant signal and the pointer signal received from latches 272 in Figure 13. These signals are decoded by decoder 300 to generate the MAR select (SEL) signal. The MAR select latches are set at phase B clock time. The output of the MAR select latches selects the MAR which is passed by MUX 282 to driver 283 for addressing the memory. The MAR select signal also is passed to the update MAR latches 303 and loaded therein at phase A clock time. The output of the update MAR latches is used to enable selected MAR 1-7 at PHB time to update its contents with the updated address from master register 288.

Thus the sequence of operations is as follows. A selected MAR, say MAR 5, passes its address out to the memory through driver 283. The address in MAR 5 is also fed back to increment logic 286. Increment logic 286 advances the address and applies it to master register 288. At phase A clock time, master register 288 loads the updated address. Also at phase A time, the update MAR latches 303 are set, and the selected MAR (MAR 5) is enabled to receive the updated address from master register 288 by the next PHB clock signal. All of the MARS receive the PHB clock signal and the MAR enabled by latches 303 is updated. Thus, in one phase B to phase B cycle the address from MAR 5 has gone to the memory and the new updated address has been loaded back into MAR 5.

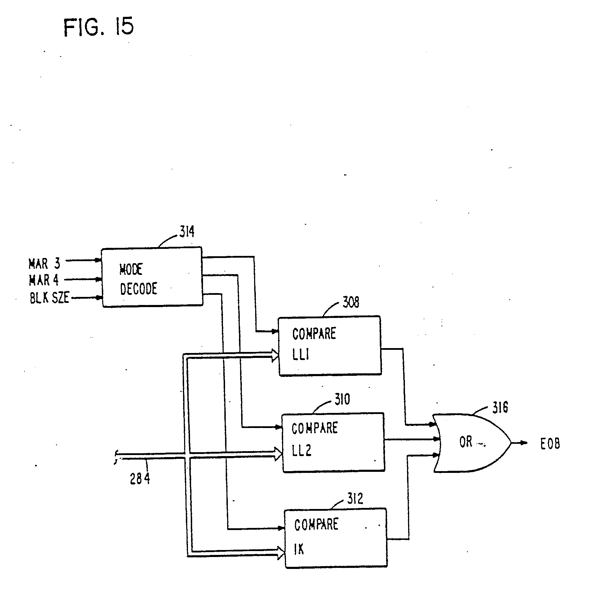

The EOB detector 290 and the increment logic 286 of Figure 14 are shown in detail in Figures 15 and 16, respectively. The end of block detection in Figure 15 is performed by comparing the address from the selected MAR to predetermined values set in the comparators. Comparators 308 and 310 look for block sizes corresponding to two different line lengths, LL1 and LL2. These lengths correspond to the number of bytes required to store all the picture elements (PELs), black and white dots, in a line of the image. The two lengths might correspond to different resolution sizes but more typically correspond to different widths of images being processed. Comparator 312 has nothing to do with line lengths and is simply a compare on a 1K block size in the memory (1K equals 1,024 bytes).

The active comparator is selected by mode decode 314. Inputs to this decode are the MAR 3 or MAR 4 SEL signal plus the block size from latches 292 in Figure 14. As will be discussed hereinafter MARS 3 and 4 use the 1K block size. The block size signal indicates the line length and is used to enable either compare 308 or compare 310. Whichever compare is enabled, OR 316 collects their outputs to generate the EOB signal.

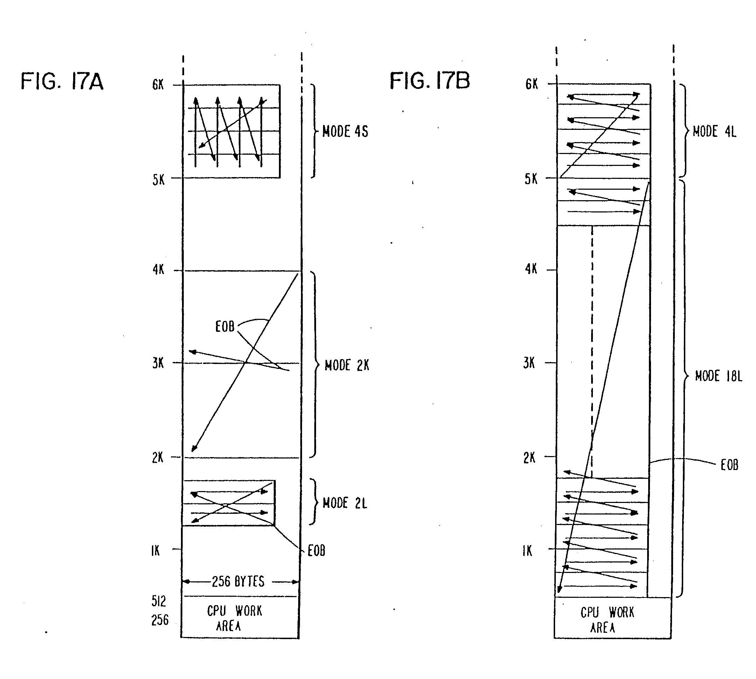

To understand the increment logic, it is first necessary to understand the modes of addressing the memory and the effect of these modes on memory space. Maps of memory space in various modes of operation are shown in Figures 17A and 17B.

There are five modes or sequences of utilization of the memory space. Some of these modes are selectable by loading mode bits into mode latches 294 (Figure 14). Other modes are simply preassigned to a given MAR and are triggered by the MAR select signal from latches 302 (Figure 14). The five modes are 2L, 4L, 18L, 2K and 4S

Mode 2L indicates that two lines of imaged data are being processed. An example of the mode 2L use of memory space is shown in Figure 17A. The address for a location in memory is specified by 13 bits read from one of the MARs. The low order eight bits are always set to zero at the beginning of a block. To address different positions of the memory for that block, the highest order five bits are changed. In mode 2L, the lowest order eight bits are incremented by one until processings works its way through one line of the image data and an end of block condition is detected. Upon detecting end of block, bits 0-7 are reset to zero and bit eight is toggled to its opposite state.

As depicted for mode 21 in Figure 17A, a line will be processed until an end of block condition is detected and then memory access ping-pongs between two lines. Note that as represented, each line had a capacity of 256 bytes, however, the line length LL1 or LL2, whichever is selected, is less than 256 bytes and thus the end of block condition occurs before end of a 256 byte section in memory. The mode 2K use of memory space is substantially the same as the mode 2L use except the block size is much bigger. In mode 2L the block size is one line length of image data; in mode 2K the block size is 1K (1,024 bytes). A mode 2K utilization is depicted between the 2K and 4K address positions in Figure 17A. Data is processed through a full 1K section of memory. At the end of the 1K section, an end of block condition is detected and the start address jumps to the beginning of the next 1K section. In other words, the 1K sections are used in ping-pong fashion just as the 2L mode uses two lines in ping-pong fashion. In mode 2K bits 0-9 are used and incremented and the start of a new section or the ping-ponging between sections is accomplished by toggling bit 10.

Mode 4L usage of the memory is depicted in Figure 17B. In mode 4L, four lines of memory are processed serially, and then the address flies back from the last position on the fourth line to the first position of the first line. Mode 18L is also indicated in Figure 17B. It is similar in operation to mode 4L except that 18 lines of image data are stored. In mode 4L the memory is addressed to each line by using bits eight and nine. In mode 18L, the memory works its way through the lines by utilizing all of the higher order five bits to sequentially address the lines.

Mode 4S is indicated in Figure 17A. Mode 4S is utilized to scroll four lines of data. In other words, after four lines of data have been processed, the oldest line is overwritten with a new line of image data. During image processing, all four lines are reviewed. This is indicated by the vertical arrows in the mode 4S memory map in Figure 17A. The scrolling is represented by the fact that the flyback at the end of the block goes to the second line rather than the first line, reading from bottom to top in the map. This assumes that the bottommost line is the oldest line and is thus overwritten. Then when vertical processing of the data through the four lines begins again, the last line processed becomes the bottommost line rather than the topmost line. Manipulation of data in the memory in this way is useful in processing image data to enhance the image.

The sequencing of the addresses to access the memory, as depicted in the various modes shown in Figures 17A and 17B is accomplished by the increment logic, working with the master register, as shown in Figure 16. Toggle decode circuits are used to increment the address bits from the selected MAR before they are loaded into the master register 288.

A toggle decode circuit is simply a count increment circuit that toggles its assigned bit if all bits lower than its assigned bit are binary one. Otherwise, it passes its assigned bit straight through. Basically, toggle decodes are used to build a counter that does not have ripple carries. Each bit of the increment logic looks at all the lower order bits and all bits are simultaneously changed. This means the count operation can be performed more rapidly than if the counter had to wait for carries to ripple through it.

In Figure 16, the increment logic with the master register is broken into two separate counters. One counter implements bits 0-7 and is effectively an eight bit counter. The other counter is a five bit counter for MAR bits 8 through 12 and is selectable in the modes 2L, 4L, 18L, 2K and 4S.

The logic in Figure 16 that enables the toggle decode is dependent upon the MAR selected as indicated by latches 302 (Figure 14) and the mode as indicated by mode latches 294 (Figure 14). As discussed earlier, some MARS have preselected modes of operation while other MARS may be operated with the increment logic in selectable modes.

In the present embodiment, the MARS and modes are paired as follows. MARS 1 and 2 are assigned to the compression/decompression adapter and may be used in either mode 2L or mode 4L. MAR 3 is assigned to the compression/decompression adapter and operates in mode 2K. MAR 4 is assigned to the minimum attendance adapter and operates only in mode 2K. MAR 5 is assigned to the printer adapter and operates only in mode 4S. MAR 6 is assigned to the scanner adapter and operates only in mode 4L. MAR 7 is assigned to the scanner adapter or the communication adapter and operates selectively either in mode 2L or mode 18L.

Now looking at Figure 16, toggle decodes 320 are enabled to increment bits 0 through 7 of the selected MAR. The enabling signal comes from OR 322 which will have an output whenever MAR 5 is not selected. If MAR 5 is selected, then OR 322 will have an output only if AND 324 indicates that a fourth line has been processed when MAR 5 is selected. This is due to the fact that MAR 5 operates only in mode 4S.

In mode 4S, bits 0-7 are incremented only every fourth byte address. This is because in mode 4S the image data is scanned vertically through four lines before the image data is processed (see mode 4S in Figure 17A). Bits 0-7 of the MAR register are reset by OR 326. OR 326 collects outputs from ANDS 328 and 330. AND 328 has an output when MAR 5 has not been selected and an end of block condition is detected. This, in effect, is an end of line or end of block condition which causes the lower eight bits to be reset to zero. In mode 4S, the lower eight bits are not reset to zero until an end of block occurs at the end of a four byte vertical scan. Accordingly, AND 330 has an output in MAR 5 if there is an EOB signal and a FOURTH signal.

The FOURTH signal referred to is generated by the usage counter shown in Figure 18 that counts four accesses to the memory. The counter is made up of a 2-bit master register, a 2-bit slave register and toggle decodes to increment the count from the slave to the master register. The counter is reset to zero when MAR 5 is initialized and is incremented by one each time MAR 5 is selected to access the memory. Every fourth access is decoded from the counter to generate the FOURTH signal used in Figure 16.

As mentioned earlier, the high order five bits in MAR address are processed by the five bit counter operating on address bits 8-12 in Figure 16.

In the different modes, different portions of the five bit counter formed by bits 8 through 12 are used. In mode 2L, only toggle decode 332 and bit 8 are used. In mode 2K only decode 336 and bit 10 are used to perform the ping-ponging between the two 1K blocks. Bits 8 and 9 are used in this mode in addition to bits 0 through 7 as part of the regular incrementing through the 1K block. In mode 4L or 4S, toggle decodes 332 and 334 are used with bits 8 and 9. In mode 18L, all five toggle decodes 332, 334, 336, 338 and 340 are used with all five bit positions 8 through 12 of the upper five bits in master register 288.

MUXs 342 and 344 are only used to select between MAR 5 operation (mode 4S) and all other operations. These MUXs are switched by AND 346. AND 346 generates a scroll output signal when there is a MAR 5 and an end of block condition and a FOURTH signal. This causes bits 8 and 9 to be incremented by 2 instead of being incremented by 1 before they are loaded into master bit positions 8 and 9. This is due to the scroll operation as depicted in mode 4S in Figure 17A. At the end of the four line scan in mode 4S instead of returning to the first line, memory accessing returns to the second line.

As shown in Figure 16, toggle decode 332 is enabled to toggle selected MAR bit 8 any time there is an end of block indication or if a carry signal is generated by toggle decodes 320 when MAR 3 or MAR 4 have been selected (OR 350, AND 352).

Finally, OR 348 enables toggle decode 332 if MAR 5 has been selected. When MAR 5 is selected, OR 354 also passes the MAR 5 select signal to enable toggle decode 334. Toggle decode 334 is also enabled when there is an end of block condition detected during mode 4L or mode 4S. Mode 4L is detected by OR 356 when MAR 6 is selected or when there is a mode 4L condition from mode latch 294 (Figure 14) during MAR 1 or MAR 2 selection (AND 358, OR 360).

AND 355 is also enabled to pass the end of block condition to enable toggle decode 334 if MAR 7 has been selected and mode 18L has been set in the mode register 294 (Figure 14). The MAR 7 mode 18L (M718L) condition is detected by AND 362 which is shown enabling AND 364 adjacent toggle decode 340. Toggle decodes 336, 338 and 340 are all enabled during the MAR 7 mode 18L condition. Toggle decode 340 is enabled during this time by an end of block condition being passed by AND 364. Similarly, toggle decode 338 is enabled by AND 364. Toggle decode 336 is enabled by end of block condition being passed by AND 366 and OR 368.

Toggle decode 336 is also enabled during mode 2K. In mode 2K, (MARS 3 and 4), the carry signal from toggle decodes 320 generates the enable signal which is passed by OR 368 to toggle decode 336.

Also, when MAR 7 and mode 18L are selected, master bits 8 through 12 are preset so that as five bits, they represent the count of two. The count of two is the starting point for mode 18L. This reset condition is detected by ANDS 370 and 372. AND gate 370 is enabled by the M718L signal by the end of block signal and by a count of 19 in input bits 8 through 12. The input bit count of 19 is detected by AND 372.

A particular increment logic has been shown in Figure 16 to rapidly implement without ripple carries, the sequences of memory accessing mapped in Figure 17A and 17B.

## Claims

1. Data processing apparatus comprising a central processor (20; 180) with its own storage (21) and coupled to a peripheral processing complex (12, 13, 14, 15, 16; 211, 212, 213, 214, 186) which complex includes plural autonomous peripheral processors (12, 13, 14, 15; 211, 212, 213, 214) of limited function, shared storage (16, 186) to which the autonomous peripheral processors are coupled by data communication paths (30; 190, 204) and a control processor (10; 202) which has no data communication path to the shared storage but which incorporates a set of memory address registers (MAR) for the peripheral processors, memory address increment logic (100, 102; 286) and 'end-of-block' detection means (Fig. 7; 247) the central processor being connected to the peripheral processors and to the control processor by control paths (22, 24; 208) so as to be able to initialise the peripheral processors, including establishing their respective current associations with the memory address registers, the memory address registers, to point to an initial respective area of shared storage and the current mode of operation of the combination of the memory address increment logic and 'end-of-block' detection means to automatically advance the address contents of a memory address register on each usage, up to the limit defined therefor, by its currently associated processor, thereby to process different blocks of data in parallel by different peripheral processors, as determined by the central processor but without imposing a running overhead thereon.

2. Apparatus as claimed in claim 1 in which the accessing of the shared storage as processed by the control processor is effected by indexing through established blocks of storage, individual blocks being initialised into one to one association with individual autonomous peripheral processors, the mode initialised for each memory address register by the central processor defining the block limits, the control processor being arranged to signal the corresponding autonomous processor over the control paths (32; 218) when the attainment of its block limit is detected, the individual autonomous peripheral processors signalling the control processor over the control paths on the completion of processing of each associated access.

3. Apparatus as claimed in claim 2, wherein the peripheral processors each include a memory address register select and enable register (40A) and the central processor is adapted to initialise each peripheral processor to a respective one of the limited set of functions of which that processor is capable the select and enable registers to point to selected respective memory address registers, and a respective mode for each memory address register by the setting of a respective mode field therein.

4. Apparatus as claimed in claim 2 wherein the control processor is arranged to transfer processor/memory address register association on completion of processing whereby the data in shared storage is processed in parallel and in succession by the autonomous peripheral processors initialised.

5. Apparatus as claimed in claim 3 wherein the end of area detect means includes a plurality of compare circuits (121, 122, 123) each preset to compare the current address output with a given, mutually different shared storage block size boundary and decode means (120) responsive to the mode output to enable one of the compare circuits.

6. Apparatus as claimed in claim 5 wherein the end of area detect means also includes a central processor presettable counter (124) counting down on shared storage accesses and enabled by the decoder in response to appropriate mode outputs.

7. Apparatus as claimed in claim 1 wherein the storage block size is fixed and the mode field being common to all the memory address registers, both being stored in-common for all the peripheral processors, the control processor being arranged to jump the address in a memory address register at the completion of processing of a block of data in shared storage to that of another block according to the stored mode setting, the autonomous peripheral processors maintaining their memory address register association, whereby the data in share storage is processed in parallel and in succession by the autonomous peripheral processors initialised.

8. Apparatus as claimed in claim 7 wherein shared storage is time multiplexed between the autonomous peripheral processors, as a group, and the central processor and priority multiplexed between the autonomous peripheral processors, the peripheral complex including a communication processor (215), being relatively functionless and coupled, for transfer of data over the control paths (208).

9. Apparatus as claimed in claim 8 wherein the control processor (202) includes a mode control (294) common to the autonomous peripheral processors and a block size control (292) common to the autonomous peripheral processors, a memory address register (MAR1 to MAR7) individual to each autonomous peripheral processor, increment logic (286) responsive to the mode control (294) to increment the contents of each accessed memory address register and to the block sizes control to signal (EOB) attainment of a block boundary, the increment logic being responsive to each signals to alter the contents of the associated memory address register to identify another block, whereby the initialied and enabled autonomous peripheral porcessors process data in shared storage by indexing within a block of a size selectable by the central processor and shifting between blocks as stipulated by the mode established by the central processor.

**Patentansprüche**

1. Datenverarbeitungsgerät mit einer Zentraleinheit (20, 180) mit eigenem Speicher (21) und Verbindung zu einem peripheren Verarbeitungskomplex (12, 13, 14, 15, 16; 211, 212, 213, 214, 186), der umfaßt mehrere autonome periphere Prozessoren (12, 13, 14, 15, 16; 211, 212, 213, 214) begrenzter Funktion, einen gemeinsam genutzten Speicher (16, 186), zu dem die autonomen Prozessoren über Datenverbindungswege (30; 190, 204) verbunden sind und einen Steuer-Prozessor (10; 202), der keine Datenverbindung zu dem gemeinsam genutzten Speicher hat, jedoch einen Satz von Speicheradress-Registern (MAR) für die peripheren Prozessoren, eine Speicheradress-Inkrementlogik (100, 102; 286) und "Blockende"-Erkennungsglieder (Fig. 7; 247) enthält, wobei die Zentraleinheit verbunden ist mit den peripheren Prozessoren und dem Steuerprozessor über Steuerleitungen (22, 24; 208), um ein Initialisieren zu ermöglichen der peripheren Prozessoren einschließlich des Aufbaus ihrer jeweiligen Verbindungen mit den Speicheradressregistern, der Speicherregister zum Hinweis auf jeweils einen Anfangsbereich des gemeinsam genutzten Speichers und des Ablaufmodes der Operation von der Kombination der Speicheradress-Inkrementlogik und dem 'Block-Ende' Erkennungsgliedern zum automatischen Vorziehen der Adressinhalte von einem Speicherregister bei jeder Verwendung bis zu der hierfür definierten Grenze, durch seinen laufend zugeordneten Prozessor, um dabei verschiedene periphere Prozessoren, wie bestimmt durch den Zentralprozessor, jedoch ohne deshalb einen zusätzlichen Platzbedarf auszulösen, zu bearbeiten.

2. Gerät nach Anspruch 1, dadurch gekennzeichnet, daß der Zugriff von dem von dem Steuerprozessor ausgewählten gemeinsamen Speicher durch Indexieren bewirkt wird über Errichtung von Speicherblocks, einzelne Blocks werden in Eins-zu-Eins Verbindung initialisiert mit einzelnen autonomen peripheren Prozessoren, die für jedes Speicheradressregister durch den Zentralprozessor initialisierte Verfahrensweise die Blockenden bestimmen, der Steuerprozessor zum Signalisieren des entsprechenden autonomen Prozessors über die Steuerwege (32, 218) ausgelegt ist, wenn das Erreichen von seinem Blockende erkannt wird, die einzelnen autonomen peripheren Prozessoren dem Steuerprozessor über die Steuerwege bei der Vervollständigung der Verarbeitung von jedem verbundenen Zugriff signalisieren.

3. Gerät nach Anspruch 2, dadurch gekennzeichnet, daß die peripheren Prozessoren jeder für sich eine Speicheradressregisteransteuerung und Freigaberegister (40 A) umfaßt und der Zentralprozessor ausgelegt ist zum Initialisieren jeden peripheren Prozessor zu einem des begrenzten Satzes der Funktionen, von denen dieser Prozessor fähig ist, die Ansteuer- und Freigaberegister zum Hinweis auf das jeweils ausgewählte Speicheradressregister, und eine jeweilige Verfahrensweise für jedes Speicheradressregister durch Setzen von einem jeweiligen Betriebsfeld darin.

4. Gerät nach Anspruch 2, dadurch gekennzeichnet, daß der Steuerprozessor zum Transfer Prozessor/Speicheradressregisterverbindung zur Vervollständigung des Ablaufes eingerichtet ist, wobei die Daten im gemeinsamen Speicher parallel und in Folge durch die initialisierten autonomen peripheren Prozessoren verarbeitet werden.

5. Gerät nach Anspruch 3, dadurch gekennzeichnet, daß die Bereichsendeabtastmittel eine Mehrzahl von Vergleicherschaltkreisen (121, 122, 123) einschließt, von denen jeder voreingestellt ist zum Vergleichen der laufenden Adresse mit einer gegebenen, wechselseitig unterschiedlich gemeinsam genutzter Speicherblockbereichsgrenze, sowie die Betriebsweise reagierende Dekodierglieder, um einen der Vergleicherschaltkreise einzuschalten.

6. Gerät nach Anspruch 5, dadurch gekennzeichnet, daß die Bereichsendeabtastmittel weiter einen Zentralprozessor voreinstellbaren Zähler (124) aufweisen, der auf gemeinsame Speicherzugriffe und eingeschaltet durch den Dekoder abhängig von geeignete Ablaufausgängen abwärts zählt.

7. Gerät nach Anspruch 1, dadurch gekennzeichnet, daß die Speicherblockgröße festgelegt ist und das Ablauffeld gemeinsam für alle Speicheradressregister ist, beide gemeinsam für alle peripheren Prozessoren gespeichert sind, der Steuerprozessor ausgelegt ist zum Springen der Adressen in einem Speicheradressregister bei der Übergabe der Verarbeitung von einem Datenblock im gemeinsam genutzten Speicher zu der von einem anderen Block entsprechend zu der gespeicherten Ablaufeinstellung, die autonomen peripheren Prozessoren ihre Speicheradressregisterverbindung aufrechterhalten, worin die Daten im gemeinsam genutzten Speicher parallel und in Folge durch die initialisierten autonomen peripheren Prozessoren verarbeitet werden.

8. Gerät nach Anspruch 7, dadurch gekennzeichnet, daß der gemeinsam genutzte Speicher zeitlich mehrfach genutzt ist, ist zwischen den autonomen peripheren Speichern als eine Gruppe und der Zentralprozessor und die priorität mehrfach genutzt ist zwischen den autonomen peripheren Prozessoren, daß der periphere Komplex einen Kommunikationsprozessor (215) enthält, der relativ funktionslos ist und zum Übertragen von Daten über die Steuerwege (208) verbunden ist.

9. Gerät nach Anspruch 8, dadurch gekennzeichnet, daß der Steuerprozessor (202) eine Betriebskontrolle (294) gemeinsam mit demn autonomen, peripheren Prozessoren und eine Blockgrößensteuerung (292) gemeinsam mit den autonomen, peripheren Prozessoren enthält, ein individuell für jeden autonomen, peripheren prozessor Speicheradressregister (MAR 1 bis MAR 7), eine Inkrementlogik (286) anspricht auf die Betriebskontrolle (294) zum Inkrementieren der Inhalte von jedem zugegriffenen Speicheradressregister und auf die Blockgrößensteuerung zum Signalisieren (EOB) des Erhalts einer Blockbereichsbegrenzung, die Inkrementlogik anspricht auf alle Signale zum Ändern des Inhalts von dem verbundenen Speicher-adressregister zum Identifizieren eines anderen Blockes, wobei die initialisierten und freigegebenen autonomen, peripheren Prozessoren Prozeßdaten in gemeinsam genutzten Speicher durch Indexieren in einem Block von einer durch den Zentralprozessor wählbaren Größe und Verschieben zwischen den durch den vom Zentralprozessor eingereichten Modus angezeigten Blocks.

**Revendications**

1. Appareil de traitement de données comprenant un processeur central (20; 180) avec sa propre mémoire (21) et couplé à un ensemble de traitement de périphériques (12, 13, 14, 15, 16; 211, 212, 213, 214, 186), lequel ensemble com-

prend: une pluralité de processeurs périphériques autonomes (12, 13, 14, 15; 211, 212, 213, 214) de fonction limitée, une mémoire commune (16, 186) à laquelle les processeurs périphériques autonomes sont couplés par des trajets de communication de données (30; 190, 204), et un processeur de commande (10; 202) qui n'a pas de trajet de communication de données vers la mémoire commune mais qui incorpore un ensemble de registres d'adresse mémoire (MAR) pour les processeurs périphériques, une logique d'incrémentation d'adresse mémoire (100, 102; 286) et un moyen de détection de "fin-de-bloc" (figure 7; 247) le processeur central étant connecté aux processeurs périphériques et au processeur de commande par des trajets de commande (22, 24; 208) de façon à pouvoir initialiser: les processeurs périphériques, y compris l'établissement de leurs associations en cours respectives avec les registres d'adresse mémoire, les registres d'adresse mémoire pour pointer vers une zone initiale respective de la mémoire commune, et le mode en cours en fonctionnement de la combinaison de la logique d'incrémentation d'adresse mémoire et des moyens de détection de "fin-de-bloc" pour faire avancer automatiquement les contenus d'adresse d'un registre d'adresse mémoire lors de chaque usage, jusqu'à la limite définie pour cela, par son processeur présentement associé, pour traiter ainsi différents blocs de données en parallèle par différents processeurs périphériques, comme cela est déterminé par le processeur central mais sans imposer un temps système.

2. Appareil selon la revendication 1, dans lequel l'accès à la mémoire commune, tel que traité par le processeur de commande, est effectué par indexation parmi des blocs établis de mémoire, des blocs individuels étant initialisés selon une association biunivoque avec les processeurs périphériques autonomes individuels, le mode initialisé de chaque registre d'adresse mémoire par le processeur définissant les limites de blocs, le processeur de commande étant disposé pour signaler le processeur autonome correspondant sur les trajets de commande (32; 218) quand le fait que sa limite du bloc est atteinte est détecté, les processeurs périphériques autonomes signalant au processeur de commande, sur les trajets de commande, l'achèvement du traitement de chaque accès associé.

3. Appareil selon la revendication 2, dans lequel les processeurs périphériques comprennent chacun un registre de sélection et de validation de registre d'adresse mémoire (40A) et le processeur central est adapté à initialiser: chaque processeur périphérique sur l'un respectif d'un ensemble limité de fonctions dont ce processeur est capable, les registres de sélection et de validation pour pointer les registres d'adresse mémoire respectifs choisis, et un mode respectif pour chaque registre d'adresse mémoire par le positionnement d'un champ de mode respectif dans celui-ci.

4. Appareil selon la revendication 2, dans lequel le processeur de commande est prévu pour transférer une association processeur/registre d'adresse mémoire lors de l'achèvement du traitement, d'où il résulte que les données dans la mémoire commune sont traitées en parallèle et successivement par les processeurs périphériques autonomes initialisés.

5. Appareil selon la revendication 3, dans lequel les moyens de détection de fin de zone comprennent une pluraiité de circuits de comparaison (121, 122, 123) dont chacun est préréglé pour comparer la sortie d'adresse en cours avec une limite de dimension de blocs mémoire commune mutuellement différente et des moyens de décodage (120) sensibles à la sortie de mode pour valider l'un des circuits de comparaison.

6. Appareil selon la revendication 5, dans lequel les moyens de détection de fin de zone comprennent également un compteur prérégiable de processeur central (124) décomptant des accès à la mémoire commune et validé par le décodeur en réponse à des sorties de modes appropriées.

7. Appareil selon la revendication 1, dans lequel la dimension du bloc mémoire est fixée et le champ de mode est commun à tous les registres d'adresse mémoire, les deux étant mémorisés en commun pour tous les processeurs périphériques, le processeur de commande étant prévu pour sauter l'adresse dans un registre d'adresse mémoire à la fin du traitement d'un bloc de données dana la mémoire commune vers celle d'un autre bloc selon le réglage de mode mémorisé, les processeurs périphériques autonomes maintenant leur association de registres d'adresse mémoire, d'où il résulte que les donées de la mémoire commune sont traitées en parallèle et successivement par les processeurs périphériques autonomes initialisés.

8. Appareil selon la revendication 7, dans lequel la mémoire commune est multiplexée dans le temps entre les processeurs cesseurs périphériques autonomes, sous forme d'un groupe, et le processeur central, et est multiplexée par priorité entre les processeurs périphériques autonomes, l'ensemble périphérique comprenant un processeur de communication (215), relativement sans fonctlon et couplé pour un transfert de données sur les trajets de commande (208).

9. Appareil selon la revendication 8, dans lequel le processeur de commande (202) comprend une commande de mode (294) commune à tous les processeurs périphériques autonomes et une commande de dimensions de blocs (292) commune aux processeurs périphériques autonomes, un registre d'adresse mémolre (MAR1 à MAR7) propre à chaque processeur périphérique autonome, une logique d'incrémentation (286) sensible à la commande de mode (294) pour incrémenter le contenu de chaque registre d'adresse mémoire auquel on a accédé et à la commande de dimensions de blocs pour signaler (EOB) le fait que l'on a atteint une limite de blocs, la loglque d'incrémentation agissant en réponse à chacun des signaux pour modifier le contenu du registre d'adresse mémoire associé pour identifier un autre bloc, d'où il résulte que les processeurs périphériques autonomes initialisés traitent des données dans la mémoire commune en indexant à l'intérieur d'un bloc d'une dimension sélectionnable par le processeur central et en effectuant des décalages entre blocs de la façon stipulée par le mode établi par le processeur central.

FIG. 1

FIG. 2

## FIG. 3A

## FIG. 3B

3

FIG. 4

## FIG. 5

S RD/WRT ──▶
ADDR. ──▶
ENABLES AND SELECTS ──▶

**DECODER** 90

──▶ 94 ADDRESS ENABLE
──▶ 96 DATA ENABLE
──▶ 95 DATA SELECT
──▶ 92 LOAD OR INCR.
──▶ 93 MAR SELECTS
──▶ 91 MAR 0-5 CLK

STATUS REG

## FIG. 6

REQ

74LS148

DECODER
74LS138

74LS273

GRT

REFRESH ── EI
I/O ADAPTER ── 0
COMM ADAPTER ── 1
E/D ADAPTER ── 2
C/D ADAPTER ── 3
           ── 4
UNUSED ── 5
       ── 6
       ── 7

EO
GS

A0
A1
A2

-POR ── G1
G2A
G2B

A
B
C

Y0
Y1
Y2
Y3
Y4
Y5
Y6
Y7

PH3 ── CK

R
E
G
I
S
T
E
R

CLEAR

REFRESH
I/O ADAPTER
COMM ADAPTER
E/D ADAPTER
C/D ADAPTER

UNUSED

+5V

PRIORITY ENCODER

5

## FIG. 7

FIG. 8

0 055 374

## FIG. 9

```
              148
RD/WRT ──→
IONBL  ──→   DECODER    ──→ RD  SEL. 0-4
ADDR   ──→
                        ──→ WRT SEL  0-3
```

## FIG. 10

FIG. II

FIG. 12

## FIG. 13

## FIG. 18

FIG. 14

FIG. 15

FIG. 16

FIG. 17A

6K
MODE 4S
5K

4K

EOB
3K
MODE 2K

2K

MODE 2L
1K
EOB
512
256
256 BYTES
CPU WORK AREA

FIG. 17B

6K
MODE 4L
5K

4K

3K
MODE 18L

2K
EOB

1K

CPU WORK AREA